# EUROPEAN PATENT SPECIFICATION

(11) **EP 3 364 570 B1**
(45) Date of publication and mention of the grant of the patent: **15.04.2020**
(21) Application number: 16868551.9
(22) Date of filing: 22.11.2016
(51) Int. Cl.: H04B 10/80, H04B 3/44, H04B 10/2581, H04J 14/04

(54) **NODE AND OPTICAL POWER SUPPLY SYSTEM**
KNOTEN UND OPTISCHES STROMVERSORGUNGSSYSTEM
N UD ET SYSTÈME D'ALIMENTATION ÉLECTRIQUE OPTIQUE

(30) Priority: 26.11.2015 JP 2015230874
(43) Date of publication of application: 22.08.2018
(73) Proprietor: Nippon Telegraph and Telephone Corporation, Tokyo 100-8116 (JP)
(72) Inventor: ODA Takuya, Musashino-shi Tokyo 180-8585 (JP); INUI Tetsuro, Musashino-shi Tokyo 180-8585 (JP); HIRANO Akira, Musashino-shi Tokyo 180-8585 (JP); IMAJUKU Wataru, Musashino-shi Tokyo 180-8585 (JP); KOBAYASHI Shoukei, Musashino-shi Tokyo 180-8585 (JP); TANAKA Takafumi, Musashino-shi Tokyo 180-8585 (JP); MIYAMOTO Yutaka, Musashino-shi Tokyo 180-8585 (JP); TAKARA Hidehiko, Musashino-shi Tokyo 180-8585 (JP)
(74) Representative: Brevalex
(86) International application number: PCT/JP2016/084594
(87) International publication number: WO 2017/090608

(56) References cited:
- WO-A1-2011/030306
- WO-A1-2013/128929
- JP-A- 2014 013 311
- JP-A- 2014 042 166
- JP-A- 2015 114 548
- US-A1- 2008 277 565
- US-A1- 2011 278 481
- US-B1- 7 359 647
- PERHIRIN,S. ET AL.: 'A power -over-fiber system and its low consumption remote equipment for submarine applications' OCEANS 10 June 2013, BERGEN, XP032487976

## Description

### TECHNICAL FIELD

The present invention relates to a node and an optical power supply system.

### BACKGROUND ART

A communication network which uses optical fibers is constructed in a core network that connects together metropolises and a metro network that connects together bases in an area. In such a network, a plurality of optical fibers are used in a bundle. Wavelength division multiplexing (WDM) transmission which involves multiplexing a plurality of optical signals having different wavelengths is performed on respective individual optical fibers to realize high-capacity signal transmission (for example, see Non-Patent Literature 1). In order to further increase the transmission capacity, the use of a multi-core fiber (MCF) which is an optical fiber having a plurality of cores instead of an optical fiber (single core fiber: SCF) having one core has been discussed (for example, see Non-Patent Literatures 2 and 3).

On the other hand, a system that supplies power to apparatuses which use a single-mode optical fiber is known (for example, see Non-Patent Literatures 4 and 5).

### CITATION LIST

### [Non-Patent Literature]

[Non-Patent Literature 1]
   Shinji Matsuoka, "Ultrahigh-speed Ultrahigh-capacity Transport Network Technology for Cost-effective Core and Metro Networks," NTT Technical Journal, March 2011, pages 8-12
[Non-Patent Literature 2]
   Yutaka Miyamoto and Hirokazu Takenouchi, "Dense Space-division-multiplexing Optical Communications Technology for Petabit-per-second Class Transmission," NTT Technical Journal, August 2014, pages 52-56
[Non-Patent Literature 3]
   Kazuyuki Shiraki, "R&D Trends in Optical Fiber and Cable Technology," NTT Technical Journal, January 2015, pages 59-63
[Non-Patent Literature 4]
   Furukawa Electric Co., Ltd., "FITEL optical fiber sensing system," [online], [retrieved on July 10, 2015], Internet <URL: https://www.furukawa.co.jp/fitel/system/products/unit.htm>
[Non-Patent Literature 5]
   businessnetwork.jp, "Business Network Frontiers, What is "Optical power supply system" that Delivers Electric Power via Optical Fiber?," [online], posted on November 11, 2014, [retrieved on July 10, 2015], Internet <URL: http://businessnetwork.jp/Detail/tabid/65/artid/3674/Default.aspx>

WO 2011/030306 A1 discloses a method of delivering electrical power using fiber optic cables which includes splitting a high power laser beam into a plurality of low power laser beams and transmitting the plurality of laser beams via conventional optical infrastructure.

US 2011/278481 A1 discloses a system for delivering optical power which includes delivering more than one optical power form over an optical conduit.

US 2008/277565 A1 discloses an optical fiber capable of carrying both optical data and optical power which includes a central waveguide that carries data light and an annular waveguide adapted to carry optical power.

### SUMMARY OF INVENTION

### [Technical Problem]

It is necessary to supply electric power in order to operate apparatuses in respective nodes that form a system that communicates using a multi-core fiber. Due to this, wiring for supplying electric power is installed to a place where nodes are provided. However, there is a case where it is desirable to provide nodes in a place where it is difficult to install wiring.

In view of the above-described problems, an object of the present invention is to provide a node and an optical power supply system which enable some of a plurality of nodes communicating using a multi-core fiber to be installed in a place where an external power source is not present.

### [Solution to Problem]

A node according to a first aspect of the present invention is a node included in an optical power supply system which includes three or more nodes and a multi-core fiber having a plurality of cores, the multi-core fiber being used in at least a partial segment of the connection between the nodes, the node including: a power supply light dropping unit configured to drop a portion or all of a power supply light from one core of the plurality of cores of the multi-core fiber; a photoelectric conversion unit configured to convert the portion or all of the power supply light dropped by the power supply light dropping unit to an electrical signal; and a power supply target facility configured to operate with the electrical signal converted by the photoelectric conversion unit.

The multi-core fiber has a common cladding to the plurality of cores of the multi-core fiber in a cross-sectional view of the multi-core fiber and each of the plurality of cores of the multi-core fiber does not contain the other of the plurality of cores of the multi-core fiber.

A node of a second aspect of the present invention is a node included in an optical power supply system which includes three or more nodes and a multi-core fiber having a plurality of cores, the multi-core fiber being used in at least a partial segment of the connection between the nodes, the node including: a power supply light connecting unit configured to couple a power supply light with an optical signal, the optical signal being received from an antecedent node of the nodes, the power supply light connecting unit being configured to connect the power supply light coupled with the optical signal to at least one core of the plurality of cores of the multi-core fiber to transmit the power supply light and the optical signal to a subsequent node of the nodes.

According to a third aspect of the present invention, in the node according to the first or second aspect, the plurality of cores of the multi-core fiber includes a core used for transmitting a communication light and the power supply light.

According to a fourth aspect of the present invention, in the node according to the first or second aspect, the plurality of cores of the multi-core fiber includes a core for transmitting a communication light and another core for transmitting the power supply light.

According to a fifth aspect of the present invention, in the node according to the fourth aspect, the core for transmitting the power supply light is configured to transmit a power supply light having high power.

According to a sixth aspect of the present invention, in the node according to the first or second aspect, a wavelength of the power supply light is included in a wavelength range used by the communication light.

According to a seventh aspect of the present invention, in the node according to the first or second aspect, a wavelength of the power supply light is not include in a wavelength range used by the communication light.

An optical power supply system according to an eighth aspect of the present invention is an optical power supply system as defined in appended claim 8.

### [Advantageous Effects of Invention]

According to the present invention, it is possible to install some of a plurality of nodes performing communication in a place where an external power source is not present.

### BRIEF DESCRIPTION OF DRAWINGS

Fig. 1 is a diagram showing a first configuration example of a communication system to which an embodiment of the present invention can be applied.
Fig. 2A is a diagram showing a first configuration example of a connector used in a communication system.
Fig. 2B is a diagram showing the first configuration example of a connector used in a communication system.
Fig. 3A is a diagram showing a second configuration example of a connector used in a communication system.
Fig. 3B is a diagram showing the second configuration example of a connector used in a communication system.
Fig. 4A is a diagram showing a third configuration example of a connector used in a communication system.
Fig. 4B is a diagram showing the third configuration example of a connector used in a communication system.
Fig. 5 is a diagram showing a second configuration example of a communication system to which an embodiment of the present invention can be applied.
Fig. 6 is a diagram showing a third configuration example of a communication system to which an embodiment of the present invention can be applied.
Fig. 7 is a diagram showing a fourth configuration example of a communication system to which an embodiment of the present invention can be applied.
Fig. 8 is a diagram showing a first configuration example of the communication system shown in Fig. 1, in which a plurality of SCFs is used in a partial segment of the connection between Add/Drop nodes.
Fig. 9 is a diagram showing a second configuration example of the communication system shown in Fig. 1, in which a plurality of SCFs is used in the connection between Add/Drop nodes.
Fig. 10 is a diagram showing a configuration example of an optical power supply system according to a first embodiment of the present invention.
Fig. 11 is a cross-sectional view showing an MCF according to the first embodiment.
Fig. 12 is a diagram showing a configuration example of a transmission-side power supply connector according to the first embodiment.
Fig. 13 is a diagram showing a configuration example of a reception-side power supply connector according to the first embodiment.
Fig. 14 is a diagram showing a configuration example of the optical power supply system according to the first embodiment.
Fig. 15 is a diagram showing a configuration example of the optical power supply system according to the first embodiment.
Fig. 16 is a diagram showing a configuration example of the optical power supply system according to the first embodiment.
Fig. 17 is a cross-sectional view showing an MCF according to the first embodiment.
Fig. 18 is a diagram showing a configuration example of the transmission-side power supply connector according to the first embodiment.
Fig. 19 is a diagram showing a configuration example of the reception-side power supply connector according to the first embodiment.
Fig. 20 is a diagram showing a configuration example of the optical power supply system according to the first embodiment.
Fig. 21 is a diagram showing a configuration example of the reception-side power supply connector according to the first embodiment.
Fig. 22 is a diagram showing a configuration example of an optical power supply system according to a second embodiment.
Fig. 23 is a cross-sectional view showing an MCF according to the second embodiment.
Fig. 24 is a diagram showing a configuration example of a transmission-side power supply connector according to the second embodiment.
Fig. 25 is a diagram showing a configuration example of a reception-side power supply connector according to the second embodiment.

### DESCRIPTION OF EMBODIMENTS

Hereinafter, an embodiment of the present invention will be described with reference to the drawings. In the following embodiments, elements denoted by the same reference numerals perform similar operations and a redundant description thereof will be omitted appropriately.

First, a communication system to which an embodiment of the present invention can be applied will be described.

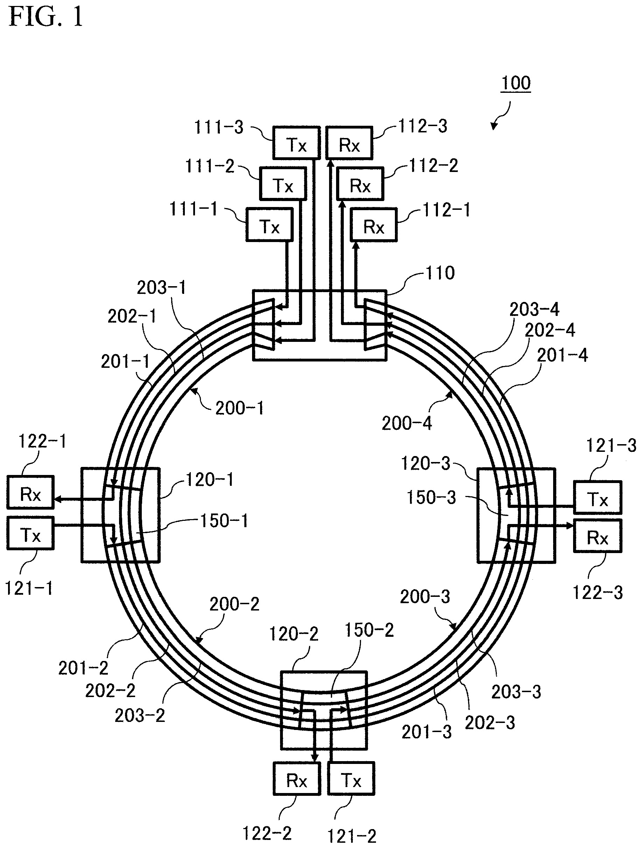

Fig. 1 is a diagram showing a configuration example of a communication system 100 to which an embodiment of the present invention can be applied. The communication system 100 includes a transceiving node 110 and n Add/Drop nodes 120, n being an integer of 1 or more. Fig. 1 shows a configuration example of the communication system 100 when n=3. In the following description, the respective n Add/Drop nodes 120 will be referred to as Add/Drop nodes 120-1 to 120-n. Moreover, the transceiving node 110 and the Add/Drop node 120 will be collectively referred to as a "node." In the following description, a transmitting device, a receiving device, a transceiving device, and the like that perform communication using optical signals and nodes will be described as individual configurations. However, a node may include a transmitting device, a receiving device, a transceiving device, and the like.

Nodes are connected together by multi-core fibers (MCFs) 200-1 to 200-4. The communication system 100 has a physical topology of a single-system one-way ring configuration in which the nodes are connected together by the MCFs 200-1 to 200-4. The transceiving node 110 and the Add/Drop node 120-1 are connected together by the MCF 200-1. The Add/Drop node 120-1 and the Add/Drop node 120-2 are connected together by the MCF 200-2. The Add/Drop node 120-2 and the Add/Drop node 120-3 are connected together by the MCF 200-3. The Add/Drop node 120-3 and the transceiving node 110 are connected together by the MCF 200-4. Each of the MCFs 200-1 to 200-4 of the communication system 100 has three cores 201, 202, and 203.

When the description of the configuration of the communication system 100 is generalized, an Add/Drop node 120-i (1≤i≤n-1) is connected to an Add/Drop node 120-(i+l) by an MCF 200-(i+1). The MCF 200-1 connects together the transceiving node 110 and the Add/Drop node 120-1. The MCF 200-(n+l) connects together the Add/Drop node 120-n and the transceiving node 110.

Each node of the communication system 100 includes a transmitting device (Tx) and a receiving device (Rx) that perform communication between the nodes. Transmitting devices 111-1 to 111-3 and receiving devices 112-1 to 112-3 are provided in the transceiving node 110. A transmitting device 121-1 and a receiving device 122-1 are provided in the Add/Drop node 120-1. A transmitting device 121-2 and a receiving device 122-2 are provided in the Add/Drop node 120-2. A transmitting device 121-3 and a receiving device 122-3 are provided in the Add/Drop node 120-3. The transmitting devices 111-1 to 111-3 generate optical signals to be transmitted to the Add/Drop nodes 120-1 to 120-3, respectively. The receiving devices 112-1 to 112-3 receive optical signals transmitted from the Add/Drop nodes 120-1 to 120-3 and acquire information included in the optical signals. The transmitting devices 121-1 to 121-3 generate optical signals to be transmitted to the transceiving node 110. The receiving devices 122-1 to 122-3 receive optical signals transmitted from the transceiving node 110 and acquire information included in the optical signals.

The transmitting devices 111-1 to 111-3 generate optical signals addressed to the Add/Drop nodes 120-1 to 120-3, respectively. The three optical signals generated by the transmitting devices 111-1 to 111-3 are added to the cores 201-1 to 203-1 of the MCF 200-1, respectively. The receiving devices 112-1 to 112-3 receive optical signals transmitted from the Add/Drop nodes 120-1, 120-2, and 120-3 to nodes included in the receiving devices, respectively. The receiving devices 112-1 to 112-3 receive optical signals from the Add/Drop nodes 120-1 to 120-3 via the cores 201-4 to 203-4 of the MCF 200-4. A fan-in device or a fan-out device is used for adding optical signals to the MCF 200 and dropping optical signals from the MCF 200 in the transceiving node 110.

The fan-in device is a device which is connected to each of the cores in a multi-core fiber and which adds optical signals to the cores. The fan-out device is a device which is connected to each of the cores in a multi-core fiber and which drops each of optical signals propagating through the cores. Since the only difference between the devices is that the propagating directions of optical signals are different, input and output of optical signals to and from a multi-core fiber may be performed using any one of the fan-in device and the fan-out device. Moreover, adding of optical signals addressed to a multi-core fiber and dropping of optical signals from the multi-core fiber may be performed using one device.

Connectors 150-1 to 150-3 are provided in the Add/Drop nodes 120-1 to 120-3, respectively. A connector 150-i of an Add/Drop node 120-i (i=1, 2, 3) is connected to an MCF 200-i and an MCF 200-(i+1). A connector 150-i drops an optical signal addressed to a subject node among the optical signals added in the transceiving node 110 from the MCF 200-i. Moreover, the connector 150-i adds optical signals addressed to the transceiving node 110 to the cores of the MCF 200-(i+ 1).

In the Add/Drop node 120-1, the connector 150-1 drops an optical signal addressed to the subject node from the core 201-1 of the MCF 200-1. The connector 150-1 connects the dropped optical signal to the receiving device 122-1. Moreover, the connector 150-1 adds an optical signal generated by the transmitting device 121-1 to the core 201-2 of the MCF 200-2. The optical signal added to the core 201-2 is an optical signals transmitted from the Add/Drop node 120-1 to the transceiving node 110.

The connector 150-1 connects the cores 202-1 and 203-1 among the cores of the MCF 200-1 to the cores 202-2 and 203-2 among the cores of the MCF 200-2. The connector 150-1 relays optical signals between the MCF 200-1 and the MCF 200-2. The connector 150-1 relays optical signals transmitted through cores other than the cores 201-1 and 201-2 that add or drop optical signals.

In the Add/Drop node 120-2, the connector 150-2 drops an optical signal addressed to the subject node from the core 202-2 of the MCF 200-2. The connector 150-2 connects the dropped optical signal to the receiving device 122-2. Moreover, the connector 150-2 adds an optical signal generated by the transmitting device 121-2 to the core 202-3 of the MCF 200-3. The optical signal added to the core 202-3 is an optical signal transmitted from the Add/Drop node 120-2 to the transceiving node 110.

The connector 150-2 connects the cores 201-2 and 203-2 among the cores of the MCF 200-2 to the cores 201-3 and 203-3 among the cores of the MCF 200-3. The connector 150-2 relays optical signals between the MCF 200-2 and the MCF 200-3. The connector 150-2 relays optical signals transmitted through cores other than the cores 201-2 and 201-3 that add or drop optical signals.

In the Add/Drop node 120-3, the connector 150-3 drops an optical signal addressed to the subject node from the core 203-3 of the MCF 200-3. The connector 150-3 connects the dropped optical signal to the receiving device 122-3. Moreover, the connector 150-3 adds an optical signal generated by the transmitting device 121-3 to the core 203-4 of the MCF 200-4. The optical signal added to the core 203-4 is an optical signal transmitted from the Add/Drop node 120-3 to the transceiving node 110.

The connector 150-3 connects the cores 201-3 and 202-3 among the cores of the MCF 200-3 to the cores 201-4 and 202-4 among the cores of the MCF 200-4. The connector 150-3 relays optical signals between the MCF 200-3 and the MCF 200-4. The connector 150-3 relays optical signals transmitted through cores other than the cores 203-3 and 203-4 that add or drop optical signals.

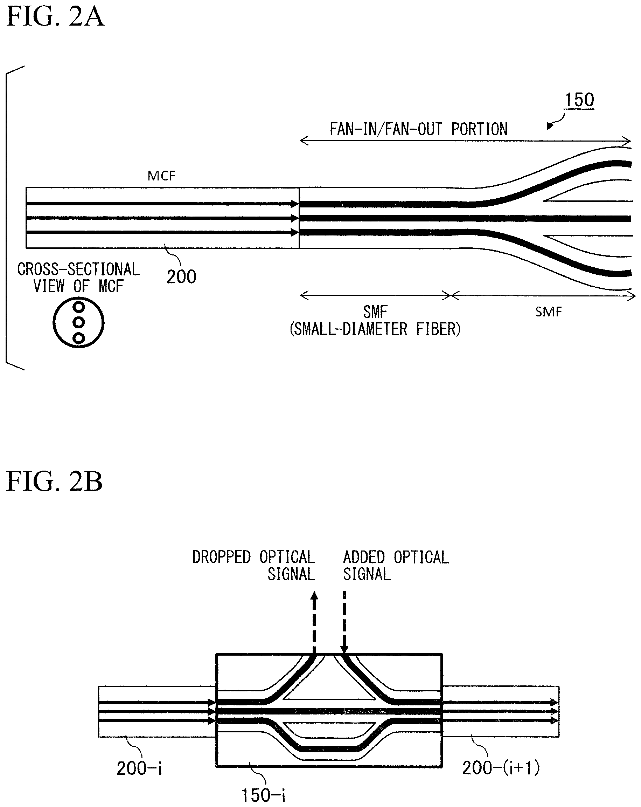

Figs. 2A and 2B are diagrams showing a first configuration example of the connector 150 used in the communication system 100. The connector 150 includes a fan-in/fan-out portion including a plurality of small-diameter single-mode fibers (SMFs) and a plurality of SMFs. As shown in Fig. 2A, the connector 150 includes a small-diameter SMF for each of the cores of a connection target MCF 200. One set of ends of the plurality of small-diameter SMFs are provided at positions facing the cores of the MCF 200. Moreover, the other set of ends of the plurality of small-diameter SMFs are provided at positions facing one set of ends of the SMFs. Each of the small-diameter SMFs connects together the SMF and the core of the MCF 200. The connector 150 can drop optical signals transmitted through the respective cores of the MCF 200 via the small-diameter SMF and the SMF. Moreover, by inputting optical signals to the SMF, it is possible to input optical signals to the cores of the MCF 200.

The connector 150-i shown in Fig. 2B connects together the MCF 200-i and the MCF 200-(i+1). The other set of ends of SMFs corresponding to cores that transmit optical signals which are an Add/Drop target are drawn out to a side surface of the connector 150-i. At the other set of ends of the SMFs drawn out to the side surface of the connector 150-i, adding and dropping (Add/Drop) of the optical signal can be performed.

The other set of ends of the SMFs corresponding to cores that transmit optical signals which are not the Add/Drop target among the cores of the MCF 200-i and the other set of ends of the SMFs corresponding to cores that transmit optical signals which are not the Add/Drop target among the cores of the MCF 200-(i+1l) are provided at positions facing each other. In the connector 150-i, optical signals which are not the Add/Drop target are relayed from the MCF 200-i to the MCF 200-(i+1l) via the small-diameter SMFs and the SMFs.

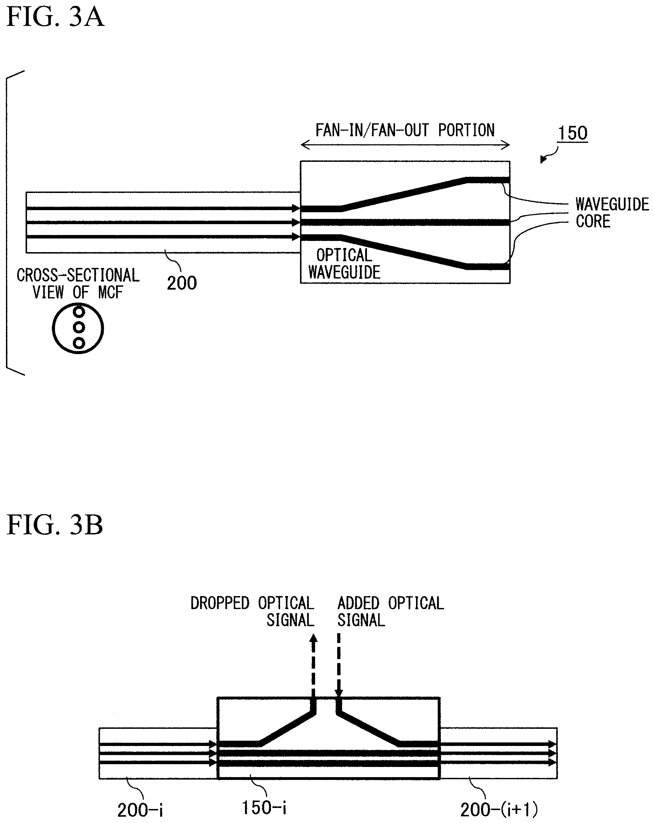

Figs. 3A and 3B are diagrams showing a second configuration example of the connector 150 used in the communication system 100. Figs. 3A and 3B show a configuration example different from the configuration example of the connector 150 shown in Figs. 2A and 2B. The connector 150 shown in Figs. 3A and 3B includes an optical waveguide including a plurality of waveguide cores formed on a glass substrate as a fan-in/fan-out portion. As shown in Fig. 3A, in the connector 150, the plurality of waveguide cores are provided at positions facing the cores of a connection target MCF 200. Optical signals transmitted through the respective cores of the MCF 200 are split via the waveguide cores. Moreover, by adding optical signals to the waveguide cores, it is possible to input optical signals to the respective cores of the MCF 200.

In the connector 150-i shown in Fig. 3B, one set of ends of waveguide cores corresponding to the cores that transmit optical signals which are the Add/Drop target among the cores of the MCF 200-i and the MCF 200-(i+1) connected together by the connector 150-i are provided at positions facing the cores of the MCFs. The other set of ends of the waveguide cores are provided on a side surface of the connector 150-i. At the other set of ends of the waveguide cores positioned on the side surface of the connector 150-i, adding and dropping of optical signals can be performed.

One set of ends of the waveguide cores corresponding to the cores that transmit optical signals which are not the Add/Drop target among the cores of the MCF 200-i are provided at positions facing the cores of the MCF. The other set of ends of the waveguide cores are provided at positions facing the cores that transmit optical signals which are not the Add/Drop target among the cores of the MCF 200-(i+1). The cores that transmit optical signals which are not the Add/Drop target in the MCF 200-i and the MCF 200-(i+1) are connected to waveguide cores in a one-to-one relationship. In the connector 150-i, the optical signals which are not the Add/Drop target are relayed from the cores of the MCF 200-i to the cores of the MCF 200-(i+1) via the waveguide cores.

The waveguide cores may be formed in a three-dimensional space as disclosed in Reference Document 1 as well as being formed in a two-dimensional space of a substrate plane.

### [Reference Document 1]

R. R. Thomson, et al., "Ultrafast-laser inscription of a three dimensional fan-out device for multicore fiber coupling applications," Optics Express, OSA Publishing, 2007, Vol. 15, Issue 18, p. 11691-11697

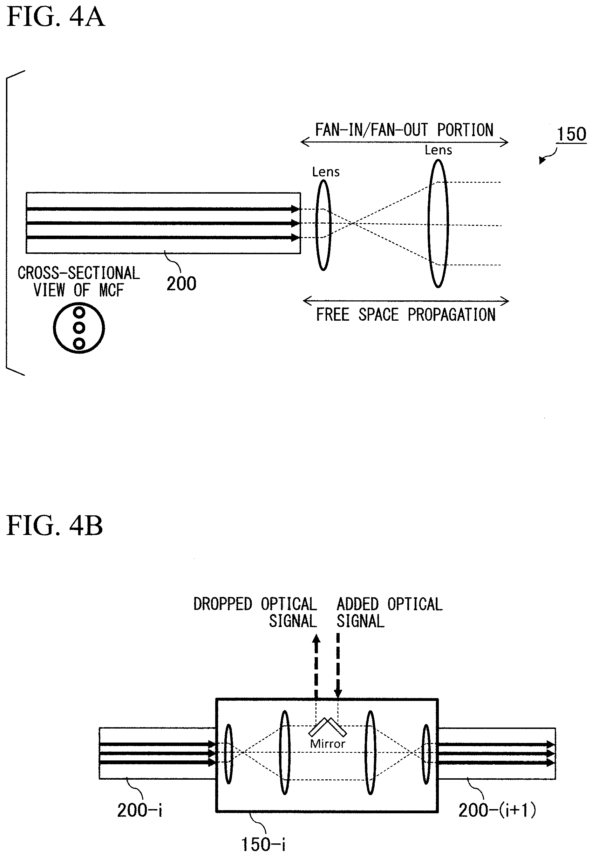

Figs. 4A and 4B are diagrams showing a third configuration example of the connector 150 used in the communication system 100. Figs. 4A and 4B show a configuration example different from the configuration example of the connector 150 shown in Figs. 2A, 2B, 3A, and 3B. The connector 150 shown in Figs. 4A and 4B causes optical signals transmitted through the respective cores of the MCF 200 to be output to a free space and causes the optical signals of the respective cores in the free space to be split by an optical system. For example, as shown in Fig. 4A, the connector 150 includes a fan-in/fan-out portion formed of two lenses. The optical signals transmitted through the respective cores of the MCF 200 are output to the free space and are split by being refracted by the two lenses. Add/Drop of optical signals are performed using an optical system. Connection of two MCFs 200 via a free space is disclosed in Reference Document 2, for example.

### [Reference Document 2]

W. Klaus, et al., "Free-Space Coupling Optics for Multicore Fibers," Photonics Technology Letters, IEEE, September 2012, Volume 24, Issue 21, p. 1902-1905

Fig. 4B is a diagram showing a configuration example of the connector 150-i. In the connector 150-i shown in Fig. 4B, the optical signals output from the respective cores of the MCF 200-i are collimated by an optical system (a collimator) formed by combining two lenses. Moreover, the collimated optical signals are input to the respective cores of the MCF 200-(i+1). A mirror that changes an optical path toward a side surface of the connector 150-i is disposed in an optical path of optical signals which are the Add/Drop target. A splitting target optical signal among the optical signals which are converted to parallel light by the optical system is reflected from a mirror and is dropped to the outside of the connector 150-i, whereby the splitting target optical signal can be obtained. Moreover, by causing optical signals input from the outside of the connector 150-i to strike the mirror, the optical signals reflected from the mirror are incident on the optical system obtained by combining two lenses together with the collimated optical signals. When the optical signals incident on the optical system are connected to the cores of the MCF 200-(i+l), Add target optical signals can be added to the cores.

Optical signals which are not the Add/Drop target are bundled together with the added optical signals after being split by the optical system and are input to the respective cores of the MCF 200-(i+1). In the connector 150-i, the optical signals which are not the Add/Drop target are relayed from the MCF 200-i to the MCF 200-(i+1) via a free space. Although two lenses are used for collimating light output from the fiber and a mirror is used for changing the propagating direction of light in the free space in the drawings, an optical device having the same function may be used.

Although Figs. 2A, 2B, 3A, 3B, 4A, and 4B show a configuration example of the connector 150, the connector 150 may be realized using a medium and a method other than those described above. For example, a planar lightwave circuit (PLC) having an optical waveguide formed on a silicon may be used as a connector.

In the communication system 100, optical signals generated by the transmitting device 111-1 of the transceiving node 110 are received by the receiving device 122-1 of the Add/Drop node 120-1 via the core 201-1 of the MCF 200-1 and the connector 150-1. The optical signals generated by the transmitting device 111-2 are received by the receiving device 122-2 of the Add/Drop node 120-2 via the core 202-1 of the MCF 200-1, the connector 150-1, the core 202-2 of the MCF 200-2, and the connector 150-2. The optical signals generated by the transmitting device 111-3 are received by the receiving device 122-3 of the Add/Drop node 120-3 via the core 203-1 of the MCF 200-1, the connector 150-1, the core 203-2 of the MCF 200-2, the connector 150-2, the core 203-3 of the MCF 200-3, and the connector 150-3.

Moreover, the optical signals generated by the transmitting device 121-1 of the Add/Drop node 120-1 are received by the receiving device 112-1 of the transceiving node 110 via the connector 150-1, the core 201-2 of the MCF 200-2, the connector 150-2, the core 201-3 of the MCF 200-3, the connector 150-3, and the core 201-4 of the MCF 200-4. The optical signals generated by the transmitting device 121-2 of the Add/Drop node 120-2 are received by the receiving device 112-2 of the transceiving node 110 via the connector 150-2, the core 202-3 of the MCF 200-3, the connector 150-3, and the core 202-4 of the MCF 200-4. The optical signals generated by the transmitting device 121-3 of the Add/Drop node 120-3 are received by the receiving device 112-3 of the transceiving node 110 via the connector 150-3 and the core 203-4 of the MCF 200-4.

In the communication system 100, the transceiving node 110 has communication paths for transmitting and receiving signals to and from the Add/Drop nodes 120-1 to 120-3. The communication system 100 has a star-type logical topology around the transceiving node 110.

For example, by connecting together the MCFs 200 at each node using any one of the connectors 150 shown in Figs. 2A, 2B, 3A, 3B, 4A, and 4B, it is possible to add and drop optical signals to and from predetermined cores among a plurality of cores included in the MCF 200. In the communication system 100, by connecting together the MCF 200-i and the MCF 200-(i+1) via the connector 150-i, it is possible to easily drop optical signals addressed to the Add/Drop node 120-i and add optical signals addressed to the transceiving node 110. Since a process of dividing multiplexed optical signals having different wavelengths in respective wavelengths is not required in adding or dropping optical signals, it is possible to reduce the time and labor required for installation and maintenance of devices in the Add/Drop node 120.

Although a case in which the MCF 200 has three cores has been described, the MCF 200 may have four or more cores. When the MCF 200 has four or more cores, optical signals may be added and dropped for two or more cores of the Add/Drop node 120.

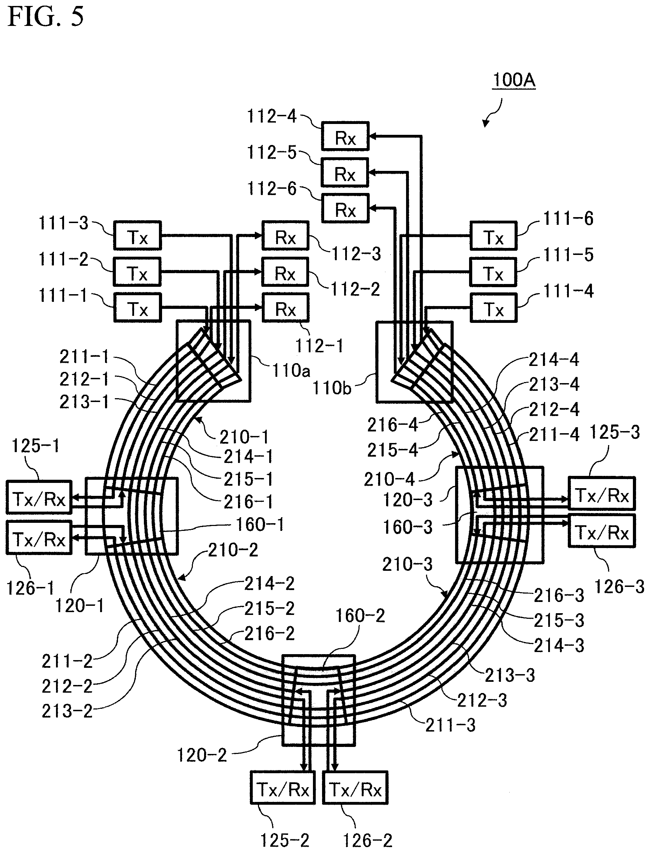

Fig. 5 is a diagram showing a configuration example of a communication system 100A to which an embodiment of the present invention can be applied. The communication system 100A includes transceiving nodes 110a and 110b and n Add/Drop nodes 120. Fig. 5 shows a configuration example of the communication system 100A when n=3. The communication system 100A is different from the communication system 100 shown in Fig. 1 in that the communication system 100A has a physical topology of a dual-system one-way ring configuration.

Nodes are connected together by MCFs 210-1 to 210-4. The transceiving node 110a and the Add/Drop node 120-1 are connected together by the MCF 210-1. The Add/Drop node 120-1 and the Add/Drop node 120-2 are connected together by the MCF 210-2. The Add/Drop node 120-2 and the Add/Drop node 120-3 are connected together by the MCF 210-3. The Add/Drop node 120-3 and the transceiving node 110b are connected together by the MCF 210-4. The MCFs 210-1 to 210-4 of the communication system 100A include six cores 211 to 216.

When the description of the configuration of the communication system 100A is generalized, an Add/Drop node 120-i (1≤i≤n-1) is connected to an Add/Drop node 120-(i+1) by an MCF 210-(i+1). The MCF 210-1 connects together the transceiving node 110a and the Add/Drop node 120-1. The MCF 210-(n+1) connects together the Add/Drop node 120-n and the transceiving node 110b.

Each node of the communication system 100A includes either a transmitting device (Tx) and a receiving device (Rx) that perform communication between nodes or a transceiving device (Tx/Rx). Transmitting devices 111-1 to 111-3 and receiving devices 112-1 to 112-3 are provided in the transceiving node 110a. Transceiving devices 125-1 and 126-1 are provided in the Add/Drop node 120-1. Transceiving devices 125-2 and 126-2 are provided in the Add/Drop node 120-2. Transceiving devices 125-3 and 126-3 are provided in the Add/Drop node 120-3. Transmitting devices 111-4 to 111-6 and receiving devices 112-4 to 112-6 are provided in the transceiving node 110b. In the configuration example of the communication system 100A shown in Fig. 5, a configuration in which the transmitting device 111 and the receiving device 112 are provided in the transceiving nodes 110a and 110b, and the transceiving devices 125 and 126 are provided in the Add/Drop nodes 120-1 to 120-3 will be described. However, the transceiving devices 125 and 126 have the functions of both a transmitting device and a receiving device therein, and there is no great difference between the transceiving device and a combination of the transmitting device and the receiving device. Either a transmitting device and a receiving device or a transceiving device may be provided in the transceiving nodes 110a and 110b and the Add/Drop nodes 120-1 to 120-3.

The transmitting devices 111-1 to 111-3 generate optical signals to be transmitted to the Add/Drop nodes 120-1 to 120-3, respectively. The optical signals generated by the transmitting devices 111-1 to 111-3 are added to the cores 211-1, 213-1, and 215-1 of the MCF 210-1, respectively. The receiving devices 112-1 to 112-3 receive optical signals transmitted from the Add/Drop nodes 120-1 to 120-3 to the transceiving node 110a, respectively. The receiving devices 112-1 to 112-3 receive optical signals from the cores 212-1, 214-1, and 216-1 of the MCF 210-1, respectively.

The transmitting devices 111-4 to 111-6 generate optical signals to be transmitted to the Add/Drop nodes 120-1 to 120-3, respectively. The optical signals generated by the transmitting devices 111-4 to 111-6 are added to the cores 211-4, 213-4, and 215-4 of the MCF 210-4, respectively. The receiving devices 112-4 to 112-6 receive optical signals transmitted from the Add/Drop nodes 120-1 to 120-3 to the transceiving node 110b, respectively. The receiving devices 112-4 to 112-6 receive optical signals from the cores 212-4, 214-4, and 216-4 of the MCF 210-4, respectively. In the transceiving nodes 110a and 110b, a fan-in device or a fan-out device is used for adding optical signals to the MCF 200 and dropping optical signals from the MCF 200.

A connector 160-i is provided in each Add/Drop node 120-i (i=1, 2, 3). The connector 160-i is connected to the MCF 210-i and the MCF 210-(i+1). The connector 160-i drops optical signals addressed to the subject node among the optical signals added in the transceiving nodes 110a and 110b from the MCF 210-i and the MCF 210-(i+1). The connector 160-i adds an optical signal addressed to the transceiving node 110a to the cores of the MCF 210-i. The connector 160-i adds an optical signal addressed to the transceiving node 110b to the cores of the MCF 210-(i+1).

In the Add/Drop node 120-1, the connector 160-1 drops an optical signal addressed to the subject node from the core 211-1 of the MCF 210-1. The connector 160-1 connects the dropped optical signal to the transceiving device 125-1. Moreover, the connector 160-1 adds an optical signal generated by the transceiving device 125-1 to the core 212-1 of the MCF 210-1. The optical signal added to the core 212-1 is an optical signal which is transmitted from the subject node to the transceiving node 110a.

Furthermore, the connector 160-1 drops an optical signal addressed to the subject node from the core 211-2 of the MCF 210-2. The connector 160-1 connects the dropped optical signal to the transceiving device 126-1. Moreover, the connector 160-1 adds an optical signal generated by the transceiving device 126-1 to the core 212-2 of the MCF 210-2. The optical signal added to the core 212-2 is an optical signal which is transmitted from the subject node to the transceiving node 110b.

The connector 160-1 connects the cores 213-1 to 216-1 among the cores of the MCF 210-1 to the cores 213-2 to 216-2 among the cores of the MCF 210-2, respectively. The connector 160-1 relays optical signals between the MCF 210-1 and the MCF 210-2. The connector 160-1 relays optical signals transmitted through cores other than the cores 211-1, 212-1, 211-2, and 212-2 through which optical signals are added or dropped.

In the Add/Drop node 120-2, the connector 160-2 drops an optical signal addressed to the subject node from the core 213-2 of the MCF 210-2. The connector 160-2 connects the dropped optical signal to the transceiving device 125-2. Moreover, the connector 160-2 adds an optical signal generated by the transceiving device 125-2 to the core 214-2 of the MCF 210-2. The optical signal added to the core 214-2 is an optical signal which is transmitted from the subject node to the transceiving node 110a.

Furthermore, the connector 160-2 drops an optical signal addressed to the subject node from the core 213-3 of the MCF 210-3. The connector 160-2 connects the dropped optical signal to the transceiving device 126-2. Moreover, the connector 160-2 adds an optical signal generated by the transceiving device 126-2 to the core 214-3 of the MCF 210-3. The optical signal added to the core 214-3 is an optical signal which is transmitted from the subject node to the transceiving node 110b.

The connector 160-2 connects the cores 211-2, 212-2, 215-2, and 216-2 among the cores of the MCF 210-2 to the cores 211-3, 212-3, 215-3, and 216-3 among the cores of the MCF 210-3, respectively. The connector 160-2 relays optical signals between the MCF 210-2 and the MCF 210-3. The connector 160-2 relays optical signals transmitted through cores other than the cores 213-2, 214-2, 213-3, and 214-3 through which optical signals are added or dropped.

In the Add/Drop node 120-3, the connector 160-3 drops an optical signal addressed to the subject node from the core 215-3 of the MCF 210-3. The connector 160-3 connects the dropped optical signal to the transceiving device 126-3. Moreover, the connector 160-3 adds an optical signal generated by the transceiving device 126-3 to the core 216-3 of the MCF 210-3. The optical signal added to the core 216-3 is an optical signal which is transmitted from the subject node to the transceiving node 110a.

Furthermore, the connector 160-3 drops an optical signal addressed to the subject node from the core 215-4 of the MCF 210-4. The connector 160-4 connects the dropped optical signal to the transceiving device 125-3. Moreover, the connector 160-3 adds an optical signal generated by the transceiving device 125-3 to the core 216-3 of the MCF 210-4. The optical signal added to the core 216-4 is an optical signal which is transmitted from the subject node to the transceiving node 110b.

The connector 160-3 connects the cores 211-3 to 214-3 among the cores of the MCF 210-3 to the cores 211-4 to 214-4 among the cores of the MCF 210-4, respectively. The connector 160-3 relays optical signals between the MCF 210-3 and the MCF 210-4. The connector 160-3 relays optical signals transmitted through cores other than the cores 215-3, 216-3, 215-4, and 216-4 through which optical signals are added or dropped.

The connectors 160-1 to 160-3 of the communication system 100A can be configured similarly to the connectors 150-1 to 150-3 of the communication system 100 by using the small-diameter fiber, the optical waveguide, the optical system, and the like as shown in Figs. 2A, 2B, 3A, 3B, 4A, and 4B.

In the communication system 100A, transmission communication paths and reception communication paths are formed between the transceiving nodes 110a and 110b and the Add/Drop nodes 120-1 to 120-3. The transceiving nodes 110a and 110b can communicate with the Add/Drop nodes 120-1 to 120-3 individually. In this manner, the communication system 100A has a tree-type logical topology in which the transceiving nodes 110a and 110b are used as root nodes.

The Add/Drop nodes 120-1 to 120-3 may use any one of the communication paths directed to the two transceiving nodes 110a and 110b as an active system (0-system) and use the other as a standby system (1-system). Moreover, the Add/Drop nodes 120-1 to 120-3 may use a communication path of the shorter transmission distance as the 0-system and use a communication path of the longer transmission distance as the 1-system. In the Add/Drop nodes 120-1 to 120-3, since a process of dividing multiplexed optical signals having different wavelengths in respective wavelengths is not required in adding or dropping optical signals, it is possible to reduce the time and labor required for installation and maintenance of devices.

Although a case in which each MCF 210 has six cores 211 to 216 has been described, the MCF 210 may have seven or more cores. When the MCF 210 has seven or more cores, optical signals may be added and dropped for two or more cores of the Add/Drop node 120.

Moreover, the transceiving node 110a and the transceiving node 110b may be connected together using the MCF 210 or a MCF having seven or more cores. In the communication system 100A, when the roles of the transceiving nodes 110a and 110b and the Add/Drop nodes 120-1 to 120-3 are changed, a logical topology can be easily changed by attaching a connector to the transceiving nodes 110a and 110b and replacing the connector 150 of each of the Add/Drop nodes 120-1 to 120-3 with another connector. In this way, it is possible to flexibly cope with a change in the network configuration.

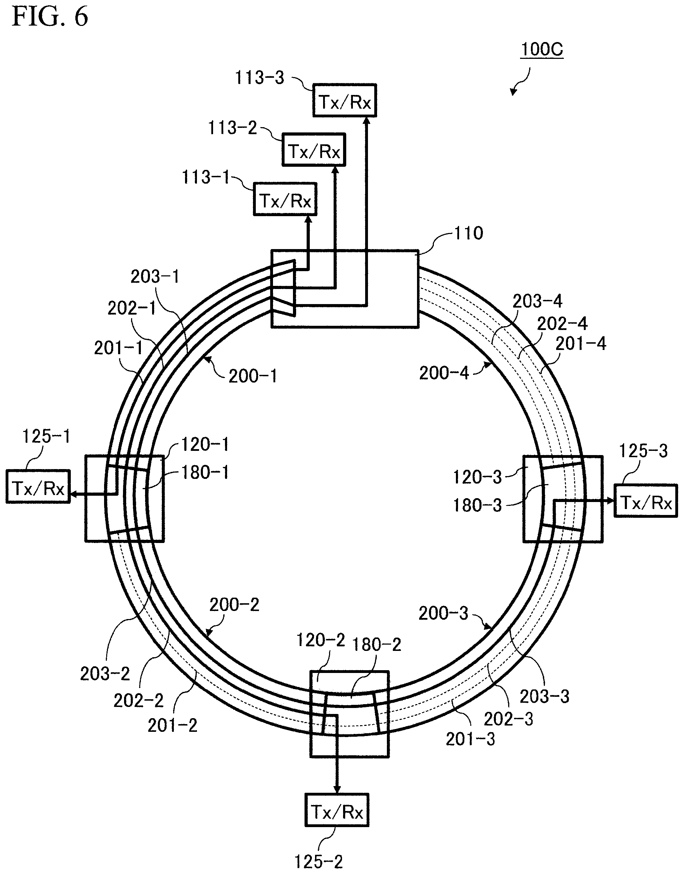

Fig. 6 is a diagram showing a configuration example of a communication system 100C to which an embodiment of the present invention can be applied. The communication system 100C includes a transceiving node 110 and n Add/Drop nodes 120. Fig. 6 shows a configuration example of the communication system 100C when n=3. In the communication system 100C, the connection of MCFs 200-1 to 200-4 between nodes is similar to the connection in the communication system 100. In the communication system 100C, communication from the transceiving node 110 to each of the Add/Drop nodes 120 and communication from each of the Add/Drop nodes 120 to the transceiving node 110 are performed using the same core. When optical signals of which the transmission directions are different are transmitted using the same core, the strength of optical signals may be suppressed to a certain level or lower in order to suppress the influence of different optical signals and the wavelengths of optical signals may be different in respective transmission directions. The communication system 100C is different from the communication system 100 of the first embodiment in that the communication system 100C has a physical topology of a single-system two-way ring configuration.

Each node of the communication system 100C includes a transceiving device (Tx/Rx) that performs communication between nodes. Transceiving devices 113-1 to 113-3 are provided in the transceiving node 110. Transceiving devices 125-1 to 125-3 are provided in the Add/Drop nodes 120-1 to 120-3, respectively. The transceiving devices 113-1 to 113-3 generate optical signals to be transmitted to the Add/Drop nodes 120-1 to 120-3, respectively. Moreover, the transceiving devices 113-1 to 113-3 receive optical signals transmitted from the Add/Drop nodes 120-1 to 120-3, respectively, and acquire information included in the optical signals. The transceiving devices 125-1 to 125-3 generate optical signals to be transmitted to the transceiving node 110. Moreover, the transceiving devices 125-1 to 125-3 receive optical signals transmitted from the transceiving node 110 and acquire information included in the optical signals.

The transceiving devices 113-1 to 113-3 generate optical signals to be transmitted to the Add/Drop nodes 120-1 to 120-3, respectively. Three optical signals generated by the transceiving devices 113-1 to 113-3 are added to the cores 201-1 to 203-1 of the MCF 200-1, respectively. Moreover, the transceiving devices 113-1 to 113-3 receive optical signals from the Add/Drop nodes 120-1 to 120-3 via the cores 201-1 to 203-1 of the MCF 200-1, respectively. A fan-in device or a fan-out device is used for adding optical signals to the MCF 200-1 and dropping optical signals from the MCF 200-1.

A connector 180-i is provided in each Add/Drop node 120-i (i=1, 2, 3). The connector 180-i is connected to the MCF 200-i and the MCF 200-(i+1). The connector 180-i drops an optical signal from the core 20i-i of the MCF 200-i and connects the dropped optical signal to the transceiving device 125-i. Moreover, the connector 180-i adds an optical signal generated by the transceiving device 125-i to the core 20i-i of the MCF 200-i. The optical signal generated by the transceiving device 125-i is an optical signal transmitted from the Add/Drop node 120-i to the transceiving node 110. The connector 180-i connects together the cores 20i-i and 20i-(i+1) other than the Add/Drop target cores among the cores of the MCF 200-i and the cores of the MCF 200-(i+1) to relay optical signals.

The transceiving node 110 and the Add/Drop node 120-1 perform two-way communication using a communication path formed by the core 201-1. The transceiving node 110 and the Add/Drop node 120-2 perform two-way communication using a communication path formed by the cores 202-1 and 202-2. The transceiving node 110 and the Add/Drop node 120-3 perform two-way communication using a communication path formed by the cores 203-1, 203-2, and 203-3. The core 201-2 of the MCF 200-2, the cores 201-3 and 202-3 of the MCF 200-3, and the cores 201-4 to 203-4 of the MCF 200-4 are cores which are not used in communication.

In the communication system 100C, the Add/Drop node 120-3 may perform communication with the transceiving node 110 using the core 201-4 of the MCF 200-4 to shorten a communication path. In this case, a fan-in device or a fan-out device is necessary in a connecting portion with the MCF 200-4 in the transceiving node 110.

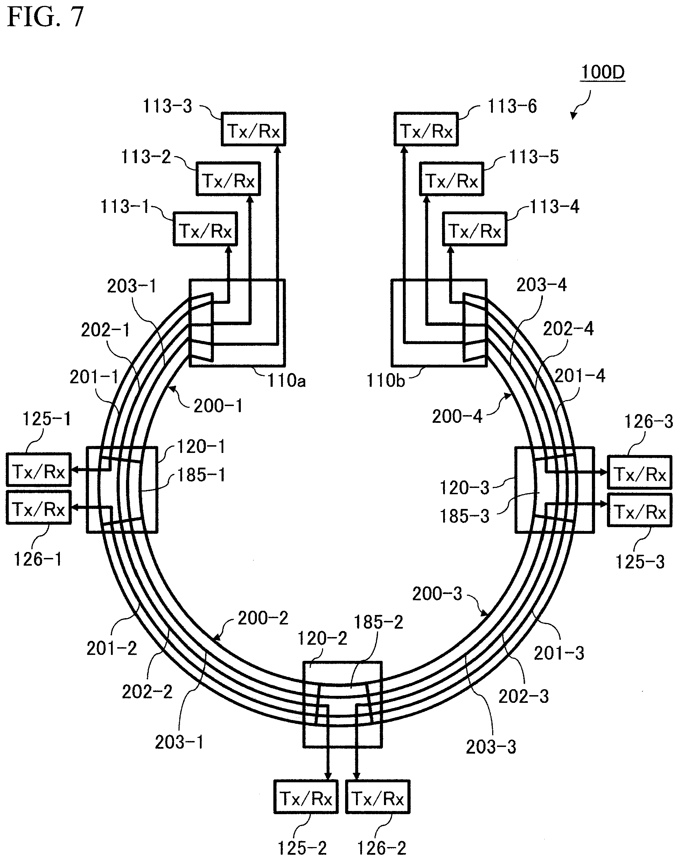

Fig. 7 is a diagram showing a configuration example of a communication system 100D to which an embodiment of the present invention can be applied. The communication system 100D includes transceiving nodes 110a and 110b and n Add/Drop nodes 120. Fig. 7 shows a configuration example of the communication system 100D when n=3. In the communication system 100D, the connection of MCFs 200-1 to 200-4 between nodes is similar to the connection of MCFs 210-1 to 210-4 of the communication system 100A. In the communication system 100D, communication from the transceiving nodes 110a and 110b to the respective Add/Drop nodes 120 and communication from the Add/Drop nodes 120 to the transceiving nodes 110a and 110b are performed using the same core. The communication system 100D has a physical topology of a duel-system two-way ring configuration.

Each node of the communication system 100D includes a transceiving device (Tx/Rx) that performs communication between nodes. Transceiving devices 113-1 to 113-3 are provided in the transceiving node 110a. Transceiving devices 113-4 to 113-6 are provided in the transceiving node 110b. Transceiving devices 125-1 to 125-3 and 126-1 to 126-3 are provided in the Add/Drop nodes 120-1 to 120-3, respectively. The transceiving devices 113-1 to 113-6 generate optical signals to be transmitted to the Add/Drop nodes 120-1 to 120-3, respectively. The transceiving devices 125-1 to 125-3 generate optical signals to be transmitted to the transceiving node 110a. The transceiving devices 126-1 to 126-3 generate optical signals to be transmitted to the transceiving node 110b. Moreover, the transceiving devices 113-1 to 113-6 receive optical signals transmitted from the Add/Drop nodes 120-1 to 120-3, respectively, and acquire information included in the optical signals. The transceiving devices 125-1 to 125-3 receive optical signals transmitted from the transceiving node 110a and acquire information included in the optical signals. The transceiving devices 126-1 to 126-3 receive optical signals transmitted from the transceiving node 110b and acquire information included in the optical signals.

In the transceiving node 110a, the transceiving devices 113-1 to 113-3 generate optical signals to be transmitted to the Add/Drop nodes 120-1 to 120-3, respectively. Three optical signals generated by the transceiving devices 113-1 to 113-3 are added to the cores 201-1 to 203-1 of the MCF 200-1, respectively. Moreover, the transceiving devices 113-1 to 113-3 receive optical signals from the Add/Drop nodes 120-1 to 120-3 via the cores 201-1 to 203-1 of the MCF 200-1, respectively. A fan-in device or a fan-out device is used for adding optical signals to the MCF 200-1 and dropping optical signals from the MCF 200-1.

In the transceiving node 110b, the transceiving devices 113-4 to 113-6 generate optical signals to be transmitted to the Add/Drop nodes 120-1 to 120-3, respectively. Three optical signals generated by the transceiving devices 113-4 to 113-6 are added to the cores 201-4 to 203-4 of the MCF 200-4, respectively. Moreover, the transceiving devices 113-4 to 113-6 receive optical signals from the Add/Drop nodes 120-1 to 120-3 via the cores 201-4 to 203-4 of the MCF 200-4, respectively. A fan-in device or a fan-out device is used for adding optical signals to the MCF 200-4 and dropping optical signals from the MCF 200-4 similarly to the transceiving node 110a.

A connector 185-i is provided in each Add/Drop node 120-i (i=1, 2, 3). The connector 185-i is connected to the MCF 200-i and the MCF 200-(i+1). The connector 185-i drops an optical signal from the core 20i-i of the MCF 200-i and connects the dropped optical signal to the transceiving device 125-i. The connector 185-i adds an optical signal generated by the transceiving device 125-i to the core 20i-i of the MCF 200-i. The optical signal generated by the transceiving device 125-i is an optical signal which is transmitted from the Add/Drop node 120-i to the transceiving node 110a.

Moreover, the connector 185-i drops an optical signal from the core 20i-(i+1) of the MCF 200-(i+1) and connects the dropped optical signal to the transceiving device 126-i. The connector 185-i adds an optical signal generated by the transceiving device 126-i to the core 20i-(i+l) of the MCF 200-(i+1). The optical signal generated by the transceiving device 126-i is an optical signal which is transmitted from the Add/Drop node 120-i to the transceiving node 110b.

Moreover, the connector 185-i connects together the core 20i-i and the core 20i-(i+1) other than the cores which are the Add/Drop target among the cores of the MCF 200-i and the cores of the MCF 200-(i+1) to relay optical signals.

The transceiving node 110a and the Add/Drop node 120-1 perform two-way communication using a communication path formed by the core 201-1. The transceiving node 110a and the Add/Drop node 120-2 perform two-way communication using a communication path formed by the cores 202-1 and 202-2. The transceiving node 110a and the Add/Drop node 120-3 perform two-way communication using a communication path formed by the cores 203-1, 203-2, and 203-3.

The transceiving node 110b and the Add/Drop node 120-1 perform two-way communication using a communication path formed by the cores 201-4, 201-3, and 201-2. The transceiving node 110b and the Add/Drop node 120-2 perform two-way communication using a communication path formed by the cores 202-4 and 202-3. The transceiving node 110b and the Add/Drop node 120-3 perform two-way communication using a communication path formed by the core 203-4.

In this manner, the communication system 100D has a tree-type logical topology in which the transceiving nodes 110a and 110b are used as root nodes and can communicate with each of the Add/Drop nodes 120-1 to 120-3. In the communication system 100D, the Add/Drop nodes 120-1 to 120-3 each can communicate with the transceiving nodes 110a and 110b. The Add/Drop nodes 120-1 to 120-3 may use any one of the communication paths between the two transceiving nodes 110a and 110b as an active system (0-system) and use the other as a standby system (1-system). Moreover, the Add/Drop nodes 120-1 to 120-3 may use a communication path of the shorter transmission distance as the 0-system and use a communication path of the longer transmission distance as the 1-system.

In the communication system 100D, the transceiving node 110a and the transceiving node 110b may be connected together using the MCF 200 or an MCF having four or more cores. In the communication system 100D, when the roles of the transceiving nodes 110a and 110b and the Add/Drop nodes 120-1 to 120-3 are changed, a logical topology can be easily changed by attaching a connector to the transceiving nodes 110a and 110b and replacing the connector 185 of the respective Add/Drop nodes 120-1 to 120-3 with another connector. In this way, it is possible to flexibly cope with a change in the network configuration.

Four communication systems 100, 100A, 100C, and 100D have been described as a communication system to which an embodiment of the present invention can be applied. In the communication systems, a configuration in which MCF is used for connection between nodes has been described. However, an optical power supply method described in the following embodiments may be applied to a communication system in which a single core fiber (SCF) is used for connection between nodes. When SCFs are used for one or a plurality of connections between nodes, a conversion connector that connects an MCF to a plurality of SCFs or a conversion connector that connects a connector to a plurality of SCFs is used.

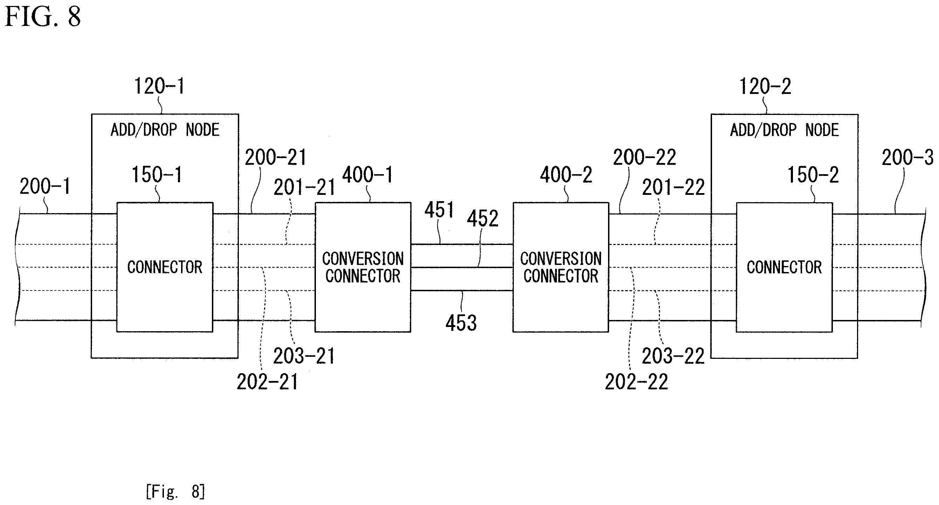

Fig. 8 is a block diagram showing a first configuration example in which a plurality of SCFs 451, 452, and 453 are used in a partial segment of the connection between the Add/Drop node 120-1 and the Add/Drop node 120-2 in the communication system 100 shown in Fig. 1. The SCFs 451, 452, and 453 are used between the MCF 200-21 connected to the connector 150-1 and the MCF 200-22 connected to the connector 150-2.

A conversion connector 400-1 is used for connection between the MCF 200-21 and the SCFs 451 to 453. The conversion connector 400-1 connects the cores 201-21, 202-21, and 203-21 of the MCF 200-21 to the SCFs 451, 452, and 453, respectively. A conversion connector 400-2 is used for connection between the MCF 200-22 and the SCFs 451 to 453. The conversion connector 400-2 connects the cores 201-22, 202-22, and 203-22 of the MCF 200-22 to the SCFs 451, 452, and 453, respectively.

The conversion connectors 400-1 and 400-2 have a configuration similar to that of a fan-in device or a fan-out device. By using the conversion connectors 400-1 and 400-2, it is possible to use the SCF in a partial segment of the connection between nodes.

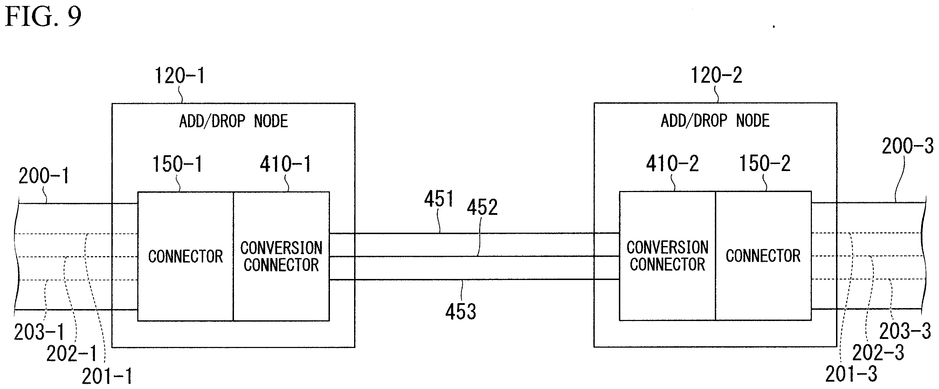

Fig. 9 is a block diagram showing a second configuration example of the communication system 100 shown in Fig. 1 in which a plurality of SCFs 451, 452, and 453 are used in the connection between the Add/Drop node 120-1 and the Add/Drop node 120-2. The SCFs 451, 452, and 453 are used for the connection between the connector 150-1 and the connector 150-2. The configuration example shown in Fig. 9 is different from the configuration example shown in Fig. 8 in that an MCF is not used for the connection between the Add/Drop nodes 120-1 and 120-2.

The Add/Drop node 120-1 further includes a conversion connector 410-1. The conversion connector 410-1 is attached to a side of the connector 150-1 close to the Add/Drop node 120-2. The Add/Drop node 120-2 further includes a conversion connector 410-2. The conversion connector 410-2 is attached to a side of the connector 150-2 close to the Add/Drop node 120-1. The SCFs 451 to 453 of the same number as the number of cores of the MCF 200 are used for the connection between the conversion connectors 410-1 and 410-2.

The conversion connector 410-1 connects the SCFs 451, 452, and 453 to the connector 150-1. The connector 150-1 performs input/output of optical signals from/to the conversion connector 410-1 instead of the MCF 200-2. The connector 150-1 connects the cores 202-1 and 203-1 of the MCF 200-1 to the SCFs 452 and 453, respectively, via the conversion connector 410-1. The conversion connector 410-1 adds an optical signal generated by the transmitting device 121-1 to the SCF 451 via the connector 150-1.

The conversion connector 410-2 connects the SCFs 451, 452, and 453 to the connector 150-2. The connector 150-2 performs input/output of optical signals from/to the conversion connector 410-2 instead of the MCF 200-2. The connector 150-2 connects the SCF 451 and 453 to the cores 201-3 and 203-3 of the MCF 200-3, respectively, via the conversion connector 410-2. The connector 150-2 connects an optical signal dropped from the SCF 453 to the receiving device 122-2 via the conversion connector 410-2.

The conversion connectors 410-1 and 410-2 has a configuration similar to that of a fan-in device or a fan-out device. By using the conversion connectors 410-1 and 410-2, it is possible to use the SCF for the connection between nodes.

Figs. 8 and 9 show configuration examples in which nodes are connected together using the SCFs instead of the MCF 200 having three cores. SCFs may be used for the connection between nodes instead of the MCF having two cores or four or more cores. In this case, similarly, a conversion connector is used.

Figs. 8 and 9 show an example in which SCFs are used for the connection between the Add/Drop nodes 120-1 and 120-2 of the communication system 100 shown in Fig. 1. The SCF may be used for the connection between other nodes. In this case, the conversion connector 400 may be used for the connection between one set of nodes and the conversion connector 410 may be used for the connection between the other set of nodes. Moreover, a combination of the conversion connector 400 that connects together an MCF and a SCF and the conversion connector 410 connected to the connector 150 may be used for the connection between one set of nodes. For example, the conversion connector 400 may be used in the Add/Drop node 120-1, and the conversion connector 410 may be used in the Add/Drop node 120-2.

MCF and SCF may be switched a plurality of times for the connection between one set of nodes. For example, MCF and SCF may be used for the connection between the Add/Drop nodes 120-1 and 120-2 in the order of MCF, SCF, MCF, SCF, and MCF. In this case, a conversion connector is used between the MCF and the SCF.

The connector 150-1 and the conversion connector 410-1 described in Fig. 9 may be configured as one connector. Similarly, the connector 150-2 and the conversion connector 410-2 may be configured as one connector. That is, a connector connected to the MCF and the plurality of SCFs may add or drop optical signals to or from the MCF or the SCF and may relay optical signals between the MCF and the SCF.

As described above, the SCF may be used in one or a plurality of connections between the nodes in the communication system 100 shown in Fig. 1 and the other communication systems.

Hereinafter, respective embodiments of the present invention will be described.

### [First embodiment]

A first embodiment relates to a core-occupying optical power supply system in which a plurality of cores of a multi-core fiber (MCF) are divided and used for communication and power supply.

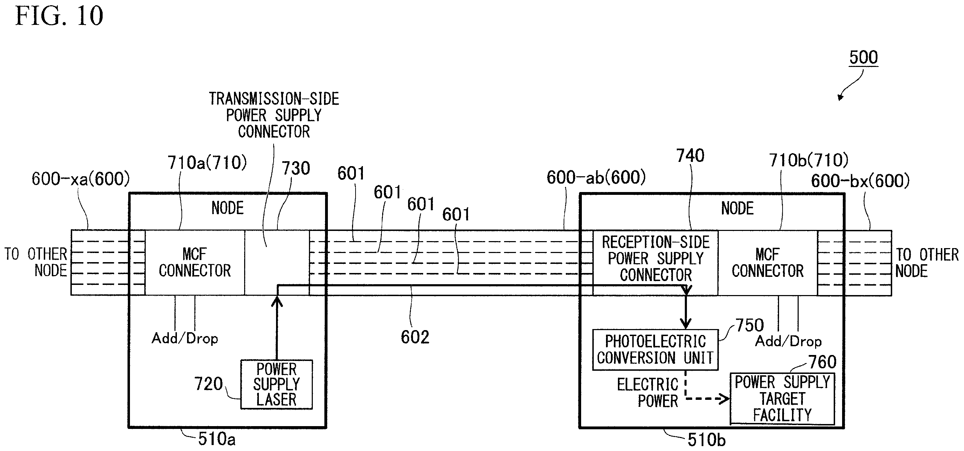

Fig. 10 is a diagram showing a configuration example of a core-occupying optical power supply system 500 according to the first embodiment. The optical power supply system 500 includes a node 510a and a node 510b connected together by an MCF 600.

The node 510a is a transceiving node or an Add/Drop node of the above-described communication system to which the present embodiment can be applied or a relay node provided between nodes of the communication system to which the present embodiment can be applied, for example. The node 510b is an Add/Drop node of the above-described communication system to which the present embodiment can be applied or a relay node provided between nodes of the communication system to which the present embodiment can be applied, for example. However, the node 510b may be a transceiving node. In the diagram, a case in which the nodes 510a and 510b are Add/Drop nodes is shown. The nodes 510a and 510b may be nodes that form a communication system of a topology different from that of the above-described communication system. Moreover, although the diagram shows a case in which the node 510a is connected to another node adjacent in a different direction from the node 510b by the MCF 600, the node 510a may not be connected to other nodes. Moreover, although the diagram shows a case in which the node 510b is connected to another node adjacent in a different direction from the node S 10a by the MCF 600, the node 510b may not be connected to other nodes.

Hereinafter, the MCF 600 that connects the node 510a to another node adjacent in a different direction from the node 510b will be referred to as an MCF 600-xa. The MCF 600 that connects together the nodes 510a and 510b will be referred to as an MCF 600-ab. The MCF 600 that connects the node 510b to another node adjacent in a different direction from the node 510a will be referred to as an MCF 600-bx.

Moreover, the MCF between first nodes adjacent in a first direction will be referred to as a "first direction-side MCF." The MCF between second nodes adjacent in a second direction will be referred to as a "second direction-side MCF." The second direction is a direction different from the first direction. The "first direction side" and the "second direction side" are used to indicate one of MCFs when the MCFs are connected to both sides of a node and do not indicate a transmission direction of signals.

The MCF 600 includes a plurality of signal transmission cores 601 and one optical power supply core 602. The signal transmission core 601 transmits an optical signal which is a communication signal transmission light. The optical power supply core 602 transmits a power supply laser beam which is a power supply light. The optical signal and the power supply laser beam may have the same wavelength or may have different wavelengths.

The node 510a includes an MCF connector 710 (a core connecting portion), a power supply laser 720, and a transmission-side power supply connector 730 (a power supply light connecting portion). The MCF connector 710 included in the node 510a will be referred to as an MCF connector 710a.

The MCF connector 710a drops an optical signal transmitted through the signal transmission core 601 allocated to the subject node from the MCF 600-xa or the transmission-side power supply connector 730. Moreover, the MCF connector 710a adds an optical signal to be transmitted through the signal transmission core 601 allocated to a destination node to the MCF 600-xa or the transmission-side power supply connector 730. The MCF connector 710a relays an optical signal transmitted through the signal transmission core 601 that does not perform adding or dropping an optical signal in the subject node between the MCF 600-xa and the transmission-side power supply connector 730. Furthermore, the MCF connector 710a relays a power supply laser beam added by the transmission-side power supply connector 730 to the optical power supply core 602 of the MCF 600-xa. When the node 510a is a relay node, the MCF connector 710a relays all optical signals transmitted through the signal transmission cores 601.

The power supply laser 720 inputs the power supply laser beam to the transmission-side power supply connector 730. The transmission-side power supply connector 730 connects the power supply laser beam output by the power supply laser 720 to the optical power supply core 602 of the MCF 600-ab. The wavelength of the power supply laser beam may or may not fall within a wavelength range of the optical signal. Furthermore, the transmission-side power supply connector 730 may connect the power supply laser beam transmitted through the optical power supply core 602 of the MCF 600-xa to the MCF connector 710a. In this case, the node 510a may include a plurality of power supply lasers 720. Moreover, the transmission-side power supply connector 730 relays an optical signal between the MCF connector 710a and the signal transmission cores 601 of the MCF 600-ab.

The node 510b includes an MCF connector 710, a reception-side power supply connector 740 (a power supply light dropping unit), a photoelectric conversion unit 750, and a power supply target facility 760. The MCF connector 710 included in the node 510b will be referred to as an MCF connector 710b.

The MCF connector 710b drops an optical signal transmitted through the signal transmission core 601 allocated to the subject node from the MCF 600-bx or the reception-side power supply connector 740. Moreover, the MCF connector 710b adds an optical signal to be transmitted through the signal transmission core 601 allocated for transmission from the subject node to a destination node to the MCF 600-bx or the reception-side power supply connector 740. The MCF connector 710b relays an optical signal transmitted through the signal transmission core 601 that does not perform adding or dropping an optical signal in the subject node between the reception-side power supply connector 740 and the MCF 600-bx. Furthermore, the MCF connector 710b relays a power supply laser beam from the optical power supply core 602 of the MCF 600-bx to the reception-side power supply connector 740. When the node 510b is a relay node, the MCF connector 710b relays all optical signals transmitted through the signal transmission cores 601.

The reception-side power supply connector 740 drops the power supply laser beam transmitted through the optical power supply core 602 of the MCF 600-ab and connects the power supply laser beam to the photoelectric conversion unit 750. Furthermore, the reception-side power supply connector 740 may drop the power supply laser beam transmitted through the optical power supply core 602 of the MCF 600-bx from the MCF connector 710b and may connect the power supply laser beam to the photoelectric conversion unit 750. In this case, the node 510b may include a plurality of photoelectric conversion units 750. Moreover, the reception-side power supply connector 740 relays an optical signal between the MCF connector 710b and the signal transmission cores 601 of the MCF 600-ab.

The photoelectric conversion unit 750 converts the input power supply laser beam to an electrical signal and supplies the electrical signal obtained by conversion to the power supply target facility 760. The power supply target facility 760 operates with electric power supplied from the photoelectric conversion unit 750. The power supply target facility 760 is a sensor or a transmitting device, for example, but is not limited thereto. For example, when the power supply target facility 760 is a sensor or the like, an optical signal including output data indicating a detection result obtained by the sensor is input to the MCF connector 710b, and the output data is transmitted to a destination node. Moreover, when the power supply target facility 760 is a transmitting device, the transmitting device may be the MCF connector 710b or the reception-side power supply connector 740 and may be some or all transmitting devices of the node 510b including a device or the like for transmitting and receiving an optical signal to and from the MCF connector 710b.

The MCF connector 710a and the transmission-side power supply connector 730 may be an integrated connector having the functions of both. Similarly, the MCF connector 710b and the reception-side power supply connector 740 may be an integrated connector having the functions of both.

Moreover, the power supply laser 720 may be incorporated in the transmission-side power supply connector 730. In this case, an electrical signal for driving a power supply laser is input to the transmission-side power supply connector 730 instead of the power supply laser beam. The power supply laser 720 incorporated in the transmission-side power supply connector 730 converts the input electrical signal to a power supply laser beam.

Moreover, the photoelectric conversion unit 750 may be incorporated in the reception-side power supply connector 740. In this case, the reception-side power supply connector 740 outputs an electrical signal converted from the power supply laser beam by the photoelectric conversion unit 750.

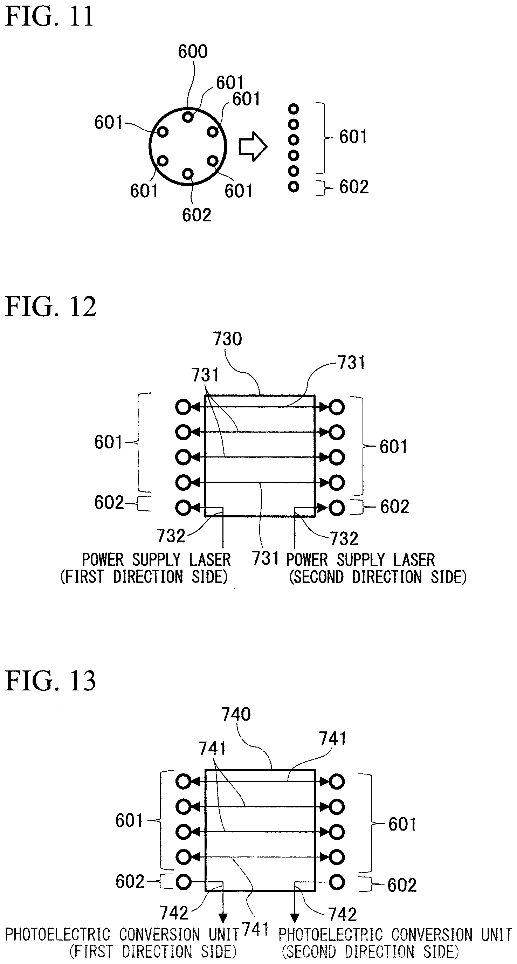

Fig. 11 is a cross-sectional view showing the MCF 600. As shown on the left in Fig. 11, the cross-section of the MCF 600 is circular. The MCF 600 may have a cross-sectional shape other than the circular shape. Although a plurality of cores are disposed inside the MCF 600 at equal intervals on a concentric circle, the core arrangement may be arbitrary. Among the plurality of cores, n cores are the signal transmission cores 601 and one core is the optical power supply core 602, n being an integer of 1 or more. The arrangement order when the signal transmission cores 601 and the optical power supply core 602 are arranged vertically like the diagram on the right in Fig. 11 does not necessarily indicate the arrangement of the signal transmission cores 601 and the optical power supply core 602 of the MCF 600. Moreover, partial signal transmission cores 601 which are not used among the n signal transmission cores 601 are not depicted, and only the used signal transmission cores 601 are depicted.

The optical power supply core 602 may be the same core as the signal transmission core 601 and may be a core specialized for optical power supply such as a core capable of transmitting high power. The core specialized for optical power supply is a core of which the core diameter is increased, for example, to be capable of transmitting light having higher power with a low loss. Moreover, an effective cross-sectional area of the optical power supply core 602 may be larger than an effective cross-sectional area of the signal transmission core 601. In order to increase the effective cross-sectional area of the optical power supply core 602, an existing technique of increasing a core diameter of the optical power supply core 602 or creating a refractive index distribution having a trench form may be applied.

Fig. 12 is a diagram showing a configuration example of the transmission-side power supply connector 730. The transmission-side power supply connector 730 shown in the diagram supplies power supply laser beams to both the MCF 600 connected to the first direction side of itself and the MCF 600 connected to the second direction side of itself.

The transmission-side power supply connector 730 has n signal transmission paths 731 and two power supply transmission paths 732. A small-diameter fiber, an optical waveguide, an optical system, and the like as shown in Figs. 2A, 2B, 3A, 3B, 4A, and 4B can be used as the signal transmission path 731 and the power supply transmission path 732.

The transmission-side power supply connector 730 relays optical signals between the signal transmission cores 601 of the MCF 600 connected to the first direction side of itself and the signal transmission cores 601 of the MCF 600 connected to the second direction side of itself through the signal transmission paths 731. The signal transmission path 731s are connected to the signal transmission cores 601 directly or via the MCF connector 710a.

The transmission-side power supply connector 730 connects the power supply laser beam output from the power supply laser 720 to the optical power supply core 602 of the MCF 600 connected to the first direction side or the optical power supply core 602 of the MCF 600 connected to the second direction side through the power supply transmission path 732. The power supply transmission path 732 is connected to the optical power supply core 602 directly or via the MCF connector 710a. The transmission-side power supply connector 730 may connect the power supply laser beam to only the first direction side or only the second direction side. In this case, the transmission-side power supply connector 730 may have the power supply transmission path 732 on only the first direction side or only the second direction side.

Fig. 13 is a diagram showing a configuration example of the reception-side power supply connector 740. The reception-side power supply connector 740 shown in the diagram drops power supply laser beams from both the MCF 600 connected to the first direction side and the MCF 600 connected to the second direction side.

The reception-side power supply connector 740 has n signal transmission paths 741 and two power supply transmission paths 742. A small-diameter fiber, an optical waveguide, an optical system, and the like can be used as the signal transmission path 741 and the power supply transmission path 742 as shown in Figs. 2A, 2B, 3A, 3B, 4A, and 4B.

The reception-side power supply connector 740 relays optical signals between the signal transmission cores 601 of the MCF 600 connected to the first direction side of itself and the signal transmission cores 601 of the MCF 600 connected to the second direction side of itself through the signal transmission path 741. The signal transmission paths 741 are connected to the signal transmission cores 601 of the MCF 600 directly or via the MCF connector 710b.

The reception-side power supply connector 740 drops a power supply laser beam transmitted by the optical power supply core 602 of the MCF 600 connected to the first direction side or the optical power supply core 602 of the MCF 600 connected to the second direction side. The reception-side power supply connector 740 connects the power supply laser beam to the photoelectric conversion unit 750 through the power supply transmission path 742. The power supply transmission path 742 is connected to the optical power supply core 602 directly or via the MCF connector 710b. The reception-side power supply connector 740 may drop the power supply laser beam from the optical power supply core 602 on only the first direction side or the optical power supply core 602 on only the second direction side. In this case, the reception-side power supply connector 740 may have the power supply transmission path 742 on only the first direction side or only the second direction side.

Due to the above-described configuration, in the optical power supply system 500, the transmission-side power supply connector 730 of the node 510a connects the power supply laser beam output by the power supply laser 720 to the optical power supply core 602 of the MCF 600-ab. The reception-side power supply connector 740 of the node 510b drops the power supply laser beam from the optical power supply core 602 of the MCF 600-ab and connects the power supply laser beam to the photoelectric conversion unit 750. The photoelectric conversion unit 750 converts the power supply laser beam to an electrical signal and supplies the electrical signal to the power supply target facility 760. Independently from transmission of the power supply laser beam, the signal transmission cores 601 of the MCF 600 transmits optical signals. The MCF connectors 710a and 710b drop the optical signal transmitted through the signal transmission core 601 allocated to the subject node. The MCF connectors 710a and 710b add the optical signal allocated to a destination node to the signal transmission core 601. The MCF connectors 710a and 710b relay optical signals transmitted through different signal transmission cores 601.

The power supply laser beam may pass through other nodes during transmission.

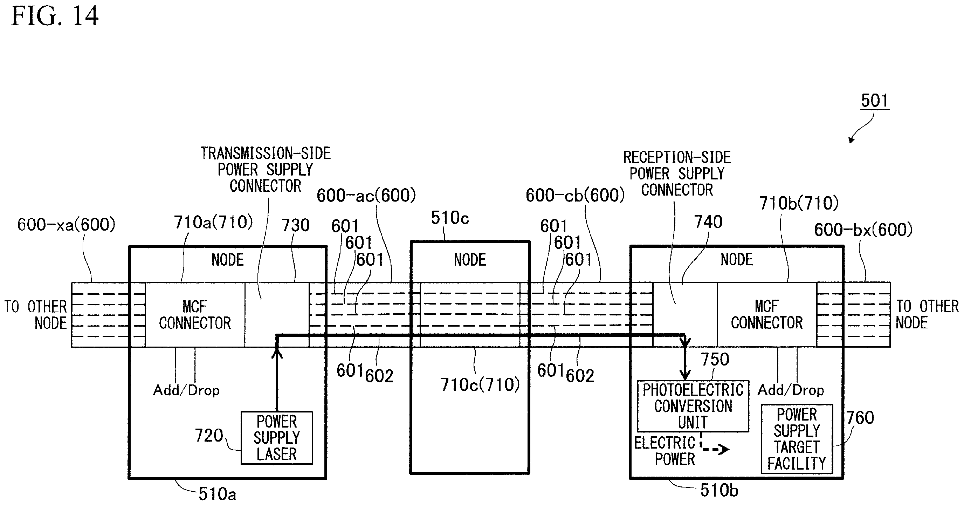

Fig. 14 is a diagram showing a configuration example of an optical power supply system 501 in which a node 510c is provided between the node 510a and the node 510b. In the diagram, the same portions as those of the optical power supply system 500 shown in Fig. 10 will be denoted by the same reference numerals and the description thereof will be omitted. The nodes 510a and 510c are connected together by the MCF 600 and the nodes 510c and 510b are connected together by the MCF 600. The MCF 600 that connects together the node 510a and the node 510c will be referred to as an MCF 600-ac. The MCF 600 that connects together the node 510c and the node 510b will be referred to as an MCF 600-cb.

The node 510c is a transceiving node or an Add/Drop node of the above-described communication system or a relay node provided between the nodes of the above-described communication system, for example. The diagram shows a case in which the node 510c is a relay node.

The node 510c includes an MCF connector 710c. The MCF connector 710c drops an optical signal transmitted through the signal transmission core 601 allocated to the subject node. The MCF connector 710c adds an optical signal to the signal transmission core 601 allocated for transmission from the subject node to a destination node. The connector 710c relays an optical signal of another signal transmission core 601. Furthermore, the MCF connector 710c relays a power supply laser beam from the optical power supply core 602 of the MCF 600-ac to the optical power supply core 602 of the MCF 600-cb. When the node 510c is a relay node, the MCF connector 710c relays only an optical signal and a power supply laser beam.

The operation of the nodes 510a and 510b is the same as the operation of the nodes 510a and 510b of the optical power supply system 500.

Moreover, if the transmission-side power supply connector 730, the reception-side power supply connector 740, and the MCF correspond to each other, another core of the MCF 600 may be used as optical power supply core 602.

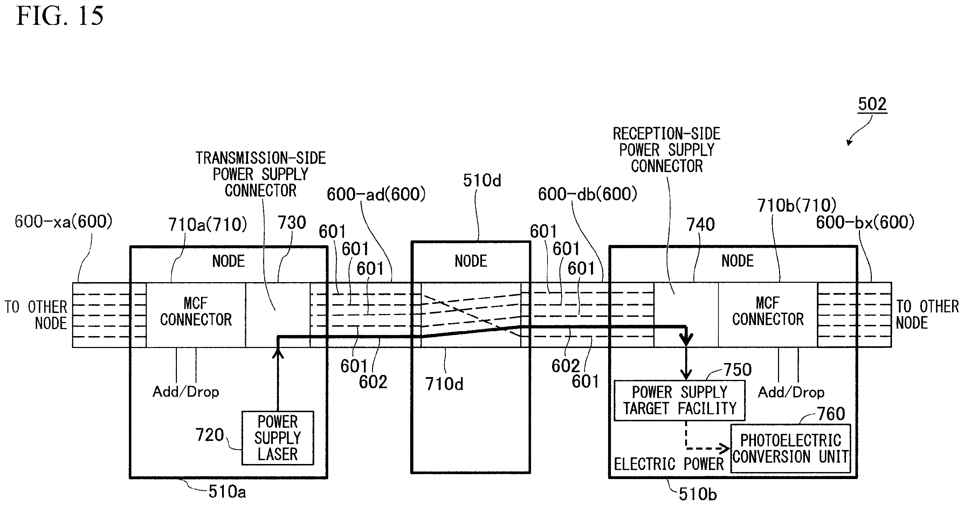

Fig. 15 is a diagram showing a configuration example of an optical power supply system 502 in which a node 510d is provided between the node 510a and the node 510b. In the diagram, the same portions as those of the optical power supply system 500 shown in Fig. 10 are denoted by the same reference numerals, and the description thereof will be omitted. The nodes 510a and 510d are connected together by the MCF 600 and the nodes 510b and 510d are connected together by the MCF 600. The MCF 600 that connects together the nodes 510a and 5 10d will be referred to as an MCF 600-ad. The MCF 600 between the nodes 5 10d and 510b will be referred to as an MCF 600-db.

The node 510d is a transceiving node or an Add/Drop node of the above-described communication system or a relay node provided between the nodes of the above-described communication system, for example. The diagram shows a case in which the node 510d is a relay node.

The node 510d includes an MCF connector 710d. The MCF connector 710d performs the same process as the MCF connector 710c. However, the MCF 600-ad and the MCF 600-db are different in that the positions of the signal transmission cores 601 and the positions of the optical power supply cores 602 corresponding to the respective nodes are different. Therefore, the MCF connector 710d relays signals between the MCF 600-ad and the MCF 600-db so that the signal transmission cores 601 allocated to the same transmission destination node and the same destination node are connected together and the corresponding optical power supply cores 602 are connected together.

Moreover, the MCF may have a plurality of optical power supply cores.

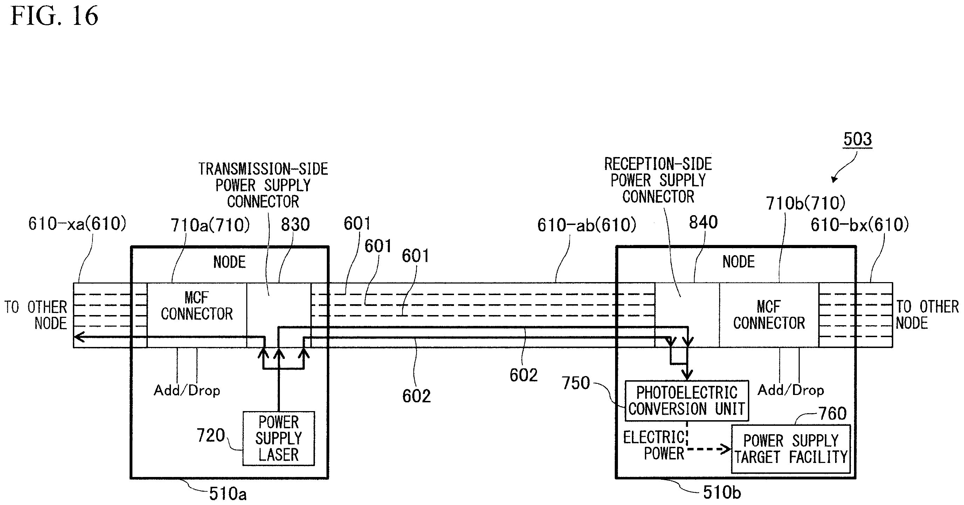

Fig. 16 is a diagram showing a configuration example of an optical power supply system 503 which uses a plurality of optical power supply cores. In the diagram, the same portions as those of the optical power supply system 500 shown in Fig. 10 are denoted by the same reference numerals, and the description thereof will be omitted. The optical power supply system 503 includes a node 510a and a node 510b connected together by an MCF 610. The MCF 610 has one or more signal transmission cores 601 and a plurality of optical power supply cores 602. Hereinafter, the MCF 610 that connects together the node 510a and another node adjacent in a different direction from the node 510b will be referred to as an MCF 610-xa. The MCF 610 that connects together the node 510a and the node 510b will be referred to as an MCF 610-ab. The MCF 610 that is configured to connect together the node 510b and another node adjacent in a different direction from the node 510a will be referred to as an MCF 610-bx.

There is an upper limit on optical power that the optical power supply core 602 can transmit. For example, when optical power exceeding the upper limit enters an MCF, there is a concern that the optical power supply core will be physically destroyed due to a phenomenon called a fiber fuse. Due to this, when a power supply laser beam having optical power exceeding the upper limit of one core is delivered, it is necessary to use a plurality of optical power supply cores. It is known that an optical power that can be transmitted safely is approximately 1 W when a general single-mode fiber (SMF) is used.

The node 510a includes a transmission-side power supply connector 830 instead of the transmission-side power supply connector 730 shown in Fig. 10.

The transmission-side power supply connector 830 connects the power supply laser beam output by the power supply laser 720 to the MCF connector 710a or the optical power supply core 602 of the MCF 610-ab. In the diagram, the transmission-side power supply connector 830 connects the power supply laser beam to two optical power supply cores 602 of the MCF 610-ab and connects the power supply laser beam transmitted through one optical power supply core 602 of the MCF 610-xa to the MCF connector 710a. In this case, the node 510a may include a plurality of power supply lasers 720. The transmission-side power supply connector 830 may connect the power supply laser beam only to a plurality of optical power supply cores 602 of the MCF 610-ab. Furthermore, the transmission-side power supply connector 830 relays optical signals between the MCF connector 710a and the signal transmission cores 601 of the MCF 610-ab.

The node 510b includes a reception-side power supply connector 840 instead of the reception-side power supply connector 740 shown in Fig. 10.

The reception-side power supply connector 840 drops the power supply laser beams transmitted through the plurality of optical power supply cores 602 of the MCF 610-ab and connects the power supply laser beams to the photoelectric conversion unit 750. Furthermore, the reception-side power supply connector 840 may drop the power supply laser beam transmitted through the optical power supply core 602 of the MCF 610-bx from the MCF connector 710b and may connect the dropped power supply laser beam to the photoelectric conversion unit 750. In this case, the node 510b may include a plurality of photoelectric conversion units 750. Moreover, the reception-side power supply connector 840 relays optical signals between the MCF connector 710b and the signal transmission cores 601 of the MCF 610-ab.

The MCF connector 710a and the transmission-side power supply connector 830 may be an integrated connector having the functions of both. Similarly, the MCF connector 710b and the reception-side power supply connector 840 may be an integrated connector having the functions of both.

Moreover, the power supply laser 720 may be incorporated in the transmission-side power supply connector 830. In this case, an electrical signal is input to the transmission-side power supply connector 830 instead of the power supply laser beam. The power supply laser 720 incorporated in the transmission-side power supply connector 830 converts an input electrical signal to a power supply laser beam. Similarly, the photoelectric conversion unit 750 may be incorporated in the reception-side power supply connector 840. In this case, the reception-side power supply connector 840 outputs an electrical signal converted from the power supply laser beam by the photoelectric conversion unit 750.

The number of optical power supply cores 602 may not be identical to the number of power supply lasers 720 or the number of photoelectric conversion units 750. For example, five power supply lasers 720, three optical power supply cores 602, and one photoelectric conversion unit 750 may be provided.

For example, although the power supply laser 720 and the photoelectric conversion unit 750 may be provided for each optical power supply core 602, by integrating these components, it is possible to reduce the device cost or to reduce space occupancy.

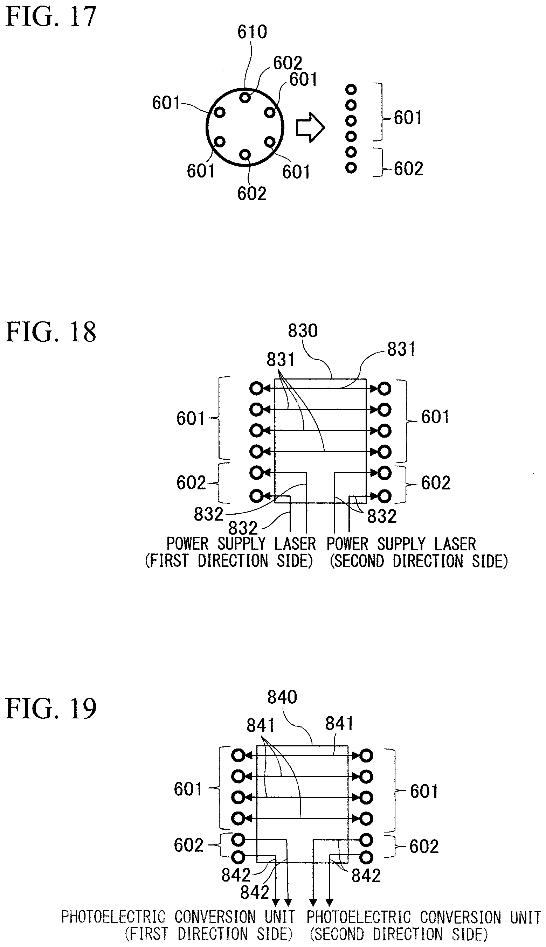

Fig. 17 is a cross-sectional view showing the MCF 610 including a plurality of optical power supply cores 602. As shown on the left in Fig. 17, the cross-section of the MCF 610 is circular. A plurality of cores are disposed on a concentric circle inside the MCF 610. Among the plurality of cores, n cores are the signal transmission cores 601, n being an integer of 1 or more, and m cores are the optical power supply cores 602, m being an integer 2 or more. The arrangement of the signal transmission core 601 and the optical power supply core 602 may be arbitrary. The arrangement order when the signal transmission cores 601 and the optical power supply cores 602 are arranged vertically like the diagram on the right in Fig. 17 does not necessarily indicate the arrangement of the signal transmission cores 601 and the optical power supply cores 602 of the MCF 610.

Fig. 18 is a diagram showing a configuration example of the transmission-side power supply connector 830. The transmission-side power supply connector 830 shown in the diagram supplies power supply laser beams to both the MCF 600 connected to the first direction side and the MCF 600 connected to the second direction side.

The transmission-side power supply connector 830 has n signal transmission paths 831 and 2m power supply transmission paths 832. A small-diameter fiber, an optical waveguide, an optical system, and the like as shown in Figs. 2A, 2B, 3A, 3B, 4A, and 4B can be used as the signal transmission path 831 and the power supply transmission path 832.

The transmission-side power supply connector 830 relays an optical signal between the signal transmission core 601 of the MCF 600 connected to the first direction side of itself and the signal transmission core 601 of the MCF 600 connected to the second direction side of itself through the signal transmission paths 831. The signal transmission paths 831 are connected to the signal transmission cores 601 directly or via the MCF connector 710a.

The transmission-side power supply connector 830 connects the power supply laser beams output from the power supply laser 720 to the optical power supply cores 602 of the MCF 600 connected to the first direction side or the optical power supply cores 602 of the MCF 600 connected to the second direction side through the power supply transmission path 832. The power supply transmission paths 832 are connected to the optical power supply cores 602 directly or via the MCF connector 710a. The transmission-side power supply connector 830 may connect the power supply laser beams to only the first direction side or only the second direction side. Moreover, the number of optical power supply cores 602 on the first direction side may be different from the number of optical power supply cores 602 on the second direction side. Moreover, the transmission-side power supply connector 830 may input a number of power supply laser beams output from a plurality of power supply lasers 720 corresponding to the number of optical power supply cores 602 (the number of power supply transmission paths 832). In this case, the transmission-side power supply connector 830 may combine these power supply laser beams and then input the same therein and the power supply laser beam may be split inside the transmission-side power supply connector 830.

Fig. 19 is a diagram showing a configuration example of the reception-side power supply connector 840. The reception-side power supply connector 840 shown in the diagram drops power supply laser beams from both the MCF 600 connected to the first direction side and the MCF 600 connected to the second direction side.

The reception-side power supply connector 840 has n signal transmission paths 841 and 2m power supply transmission paths 842. A small-diameter fiber, an optical waveguide, an optical system, and the like can be used as the signal transmission path 841 and the power supply transmission path 842 as shown in Figs. 2A, 2B, 3A, 3B, 4A, and 4B.

The reception-side power supply connector 840 relays optical signals between the signal transmission cores 601 of the MCF 600 connected to the first direction side of itself and the signal transmission cores 601 of the MCF 600 connected to the second direction side of itself through the signal transmission path 841. The signal transmission paths 841 are connected to the signal transmission cores 601 of the MCF 610 directly or via the MCF connector 710b.

The reception-side power supply connector 840 drops power supply laser beams transmitted through the optical power supply cores 602 of the MCF 600 connected to the first direction side or the optical power supply core 602 of the MCF 600 connected to the second direction side. The reception-side power supply connector 840 connects the power supply laser beams to the photoelectric conversion unit 750 through the power supply transmission paths 842. The power supply transmission paths 842 are connected to the optical power supply cores 602 directly or via the MCF connector 710b. The reception-side power supply connector 840 may drop the power supply laser beams from the optical power supply core 602 on the first direction side only or the optical power supply core 602 on the second direction side only. Moreover, the number of optical power supply cores 602 on the first direction side may be different from the number of optical power supply cores 602 on the second direction side. Moreover, the reception-side power supply connector 840 may output a number of power supply laser beams dropped from the plurality of optical power supply cores 602 corresponding to the number of optical power supply cores 602. When a number of power supply laser beams corresponding to the number cores are output, the reception-side power supply connector 840 may combine a number of power supply laser beams corresponding to the number of cores and may output the combined power supply laser beam.

Due to the above-described configuration, in the optical power supply system 503, the transmission-side power supply connector 830 of the node 510a connects the power supply laser beams output by the power supply laser 720 to the plurality of optical power supply cores 602 and the MCF connector 710a of the MCF 610-ab. The reception-side power supply connector 840 of the node 510b drops the power supply laser beams from the plurality of optical power supply cores 602 of the MCF 610-ab and connects the power supply laser beams to the photoelectric conversion unit 750. The photoelectric conversion unit 750 converts the power supply laser beams to an electrical signal and supplies the electrical signal to the power supply target facility 760. Moreover, the MCF connector 710a of the node 510a relays the power supply laser beam added from the transmission-side power supply connector 830 to the optical power supply core 602 of the MCF 610-xa. Independently from transmission of the power supply laser beam, the signal transmission cores 601 of the MCF 610 transmits optical signals. The MCF connectors 710a and 710b drop the optical signal transmitted through the signal transmission core 601 allocated to the subject node. The MCF connectors 710a and 710b add the optical signal allocated to a destination node to the signal transmission core 601. The MCF connectors 710a and 710b relays optical signals transmitted through different signal transmission cores 601.

In this manner, it is possible to supply optical power to one or a plurality of nodes in which the power supply target facility 760 is present using the plurality of optical power supply cores 602 of the MCF 610. One or a plurality of power supply source nodes may be provided for one power supply destination node. Moreover, it is possible to supply optical power from one power supply source node to one or a plurality of power supply destination nodes where the power supply target facility 760 is present.

When a plurality of nodes 510b are connected in series via the MCFs 600, the reception-side power supply connector 740 of each node 510b may drop some of the power supply laser beams transmitted through the optical power supply cores 602 and may relay the remaining power supply laser beams to the subsequent nodes 510b. In this way, it is possible to supply electric power to a plurality of node using the power supply laser beam supplied from one node.

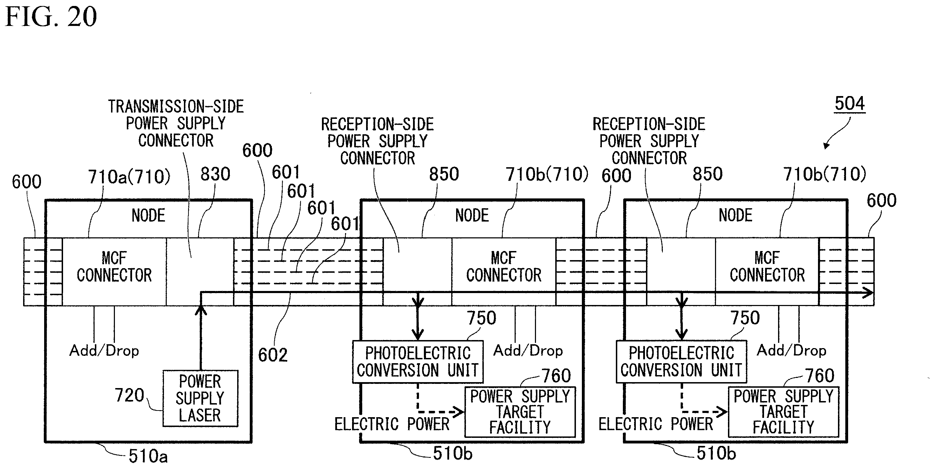

Fig. 20 is a diagram showing a configuration example of an optical power supply system 504 in which power supply destination nodes are disposed in series. In the diagram, the same portions as those of the optical power supply system 500 shown in Fig. 10 will be denoted by the same reference numerals and a description thereof will be omitted.

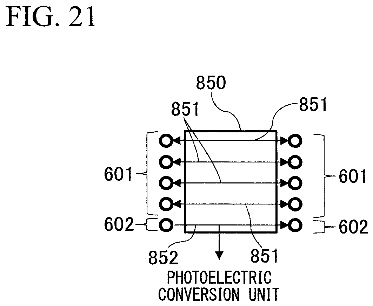

In the optical power supply system 504, a node 510a and a plurality of nodes 510b are disposed in series. Although the diagram shows a case in which the node 510a and two nodes 510b are disposed in series, three or more nodes 510b may be disposed. The nodes are connected by the MCF 600. The node 510b includes a reception-side power supply connector 850 shown in Fig. 21 instead of the reception-side power supply connector 740 shown in Fig. 13.

Fig. 21 is a diagram showing a configuration example of a reception-side power supply connector 850. The reception-side power supply connector 850 includes a plurality of signal transmission paths 851 and one power supply transmission path 852. A small-diameter fiber, an optical waveguide, an optical system, and the like can be used as the signal transmission path 851 and the power supply transmission path 852 as shown in Figs. 2A, 2B, 3A, 3B, 4A, and 4B.

The reception-side power supply connector 850 relays optical signals between the signal transmission cores 601 of the MCF 600 connected to the first direction side of itself and the signal transmission cores 601 of the MCF 600 connected to the second direction side of itself through the signal transmission path 851. The signal transmission paths 851 are connected to the signal transmission cores 601 of the MCF 600 directly or via the MCF connector 710b.

The reception-side power supply connector 850 drops a portion of the power supply laser beam transmitted from the optical power supply core 602 of the MCF 600 connected to the first direction side through the power supply transmission path 852 and connects the dropped power supply laser beam to the photoelectric conversion unit 750. The reception-side power supply connector 850 connects the remaining power supply laser beam to the optical power supply core 602 of the MCF 600 connected to the second direction side. The power supply transmission path 852 is connected to the optical power supply core 602 of the MCF 600 directly or via the MCF connector 710b.

The operation of the node 510a of the optical power supply system 504 is the same as the operation of the node 510a of the optical power supply system 501. The reception-side power supply connector 850 provided in the node 510b adjacent to the node 510a drops a portion of the power supply laser beam from the MCF 600 between the node 510a and the node 510b and connects the portion of the power supply laser beam to the photoelectric conversion unit 750. The reception-side power supply connector 850 relays the remaining power supply laser beam to the MCF connector 710b. The MCF connector 710b connects the power supply laser beam input from the reception-side power supply connector 850 to the optical power supply core 602 of the MCF 600 that connects together the nodes 510b and 510b to relay the power supply laser beam. The other node 510b operates in a similar manner. The operation on an optical signal is similar to that of the optical power supply system 501.

In this example, although a case of using one optical power supply core has been described, when a plurality of cores of the MCF are used as the optical power supply cores, the optical power supply cores may be allocated to respective nodes to supply optical power. In this case, the reception-side power supply connector 850 connects the power supply laser beam transmitted through the optical power supply core allocated to the subject node to the photoelectric conversion unit 750 of the subject node. The reception-side power supply connector 850 relays the power supply laser beam transmitted through the optical power supply core allocated to a node other than the subject node to the MCF connector 710b.

Moreover, a configuration in which one optical power supply core is shared between nodes and a configuration in which an optical power supply cores are allocated to respective nodes may be combined.

According to the present embodiment, it is possible to allow power supply light to flow into a power supply-dedicated core of an MCF and to obtain an electric signal by performing photoelectric conversion on a reception node side.

### [Second Embodiment]

The present embodiment relates to a core-sharing optical power supply system in which a communication optical signal and a power supply light are transmitted in the same core of an MCF.

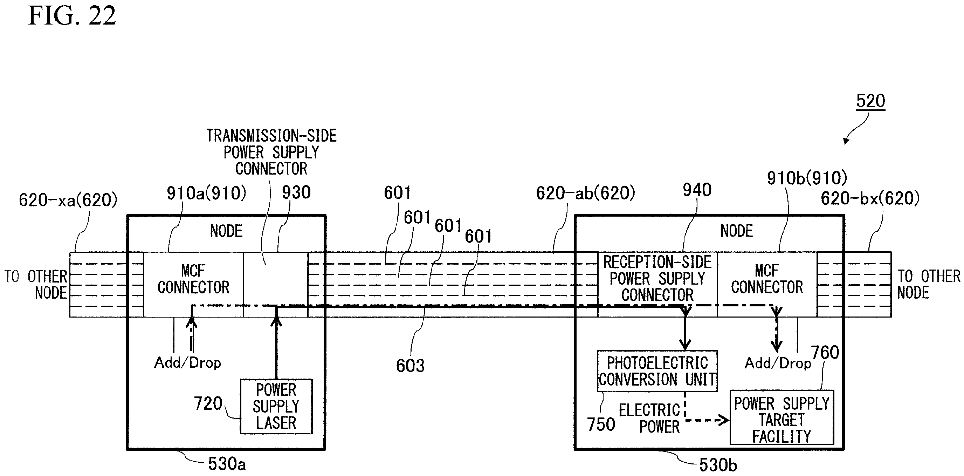

Fig. 22 is a diagram showing a configuration example of a core-sharing optical power supply system 520 according to the present embodiment. The optical power supply system 520 includes a node 530a and a node 530b connected together by an MCF 620.

The node 530a is a transceiving node or an Add/Drop node of the above-described communication system to which the present embodiment can be applied or a relay node provided between nodes of the above-described communication system to which the present embodiment can be applied, for example. The node 530b is an Add/Drop node of the communication system to which the present embodiment can be applied or a relay node provided between nodes of the communication system to which the present embodiment can be applied, for example. However, the node 530b may be a transceiving node. In the diagram, a case in which the nodes 530a and 530b are Add/Drop nodes is shown. The nodes 530a and 530b may be nodes that form a communication system of a topology different from that of the above-described communication system. Moreover, although the diagram shows a case in which the node 530a is connected to anther node adjacent in a direction different from the node 530b by the MCF 620, the node 530a may not be connected to other nodes. Moreover, although the diagram shows a case in which the node 530b is connected to anther node adjacent in a direction different from the node 530a by the MCF 620, the node 530b may not be connected to other nodes.

Hereinafter, the MCF 620 that connects together the node 530a and another node adjacent in a direction different from the node 530b will be referred to as an MCF 620-xa. The MCF 620 that connects together the nodes 530a and 530b will be referred to as an MCF 620-ab. The MCF 620 that connects together the node 530b and another node adjacent in a direction different from the node 530a will be referred to as an MCF 620-bx.

The MCF 620 has j signal transmission cores 601 and k shared cores 603, wherein j+k≥1, j is an integer of 0 or more, and k is an integer of 1 or more. The shared core 603 can be used as the signal transmission core 601. Therefore, the signal transmission core 601 may be realized by the shared core 603, and the MCF 620 may have only the shared cores 603. The shared core 603 transmits a communication optical signal and a power supply laser beam. The wavelength of the power supply laser beam is different from the wavelength of the optical signal.

The node 530a includes an MCF connector 910 (a core connecting portion), a power supply laser 720, and a transmission-side power supply connector 930. The MCF connector 910 included in the node 530a will be referred to as an MCF connector 910a.

The MCF connector 910a drops an optical signal transmitted through the signal transmission core 601 or the shared core 603 allocated to the subject node from the MCF 620-xa or the transmission-side power supply connector 930. Moreover, the MCF connector 910a adds an optical signal to be transmitted through the signal transmission core 601 or the shared core 603 allocated to a destination node to the MCF 620-xa or the transmission-side power supply connector 930. The MCF connector 910a relays optical signals transmitted through the signal transmission cores 601 or the shared cores 603 that does not perform adding or dropping an optical signal in the subject node between the MCF 620-xa and the transmission-side power supply connector 930. Furthermore, the MCF connector 910a relays a power supply laser beam input from the transmission-side power supply connector 930 to the shared core 603 of the MCF 620-xa. When the node 530a is a relay node, the MCF connector 910a relays all optical signals and all power supply laser beams.

The transmission-side power supply connector 930 connects the power supply laser beam output by the power supply laser 720 to the shared core 603 of the MCF 620-ab. The transmission-side power supply connector 930 may connect the power supply laser beam transmitted through the shared core 603 of the MCF 620-xa to the MCF connector 910a. In this case, the node 530a may include a plurality of power supply lasers 720. Furthermore, the transmission-side power supply connector 930 relays optical signals between the MCF connector 910a and the signal transmission cores 601 and the shared cores 603 of the MCF 620-ab.

The node 530b includes an MCF connector 910, a reception-side power supply connector 940, a photoelectric conversion unit 750, and a power supply target facility 760. The MCF connector 910 included in the node 530b will be referred to as an MCF connector 910b.

The MCF connector 910b drops an optical signal transmitted through the signal transmission core 601 or the shared core 603 allocated to the subject node from the MCF 620-bx or the reception-side power supply connector 940. Moreover, the MCF connector 910b adds an optical signal to be transmitted through the signal transmission core 601 or the shared core 603 allocated to a destination node to the MCF 620-bx or the reception-side power supply connector 940. The MCF connector 910b relays an optical signal transmitted through the signal transmission core 601 or the shared core 603 that does not perform adding or dropping an optical signal in the subject node between the reception-side power supply connector 940 and the MCF 620-bx. Furthermore, the MCF connector 910b connects a power supply laser beam input from the shared core 603 of the MCF 620-bx to the reception-side power supply connector 940 to relay the power supply laser beam. When the node 530b is a relay node, the MCF connector 910b relays all optical signals transmitted through the signal transmission core 601 or the shared core 603.

The reception-side power supply connector 940 drops the power supply laser beam transmitted through the shared core 603 of the MCF 620-ab by wavelength separation and connects the power supply laser beam to the photoelectric conversion unit 750. Furthermore, the reception-side power supply connector 940 may drop the power supply laser beam transmitted through the shared core 603 of the MCF 620-bx from the MCF connector 910b by wavelength separation and may connect the power supply laser beam to the photoelectric conversion unit 750. In this case, the node 530b may include a plurality of photoelectric conversion units 750. Moreover, the reception-side power supply connector 940 relays optical signals between the MCF connector 910b and the signal transmission cores 601 and the shared cores 603 of the MCF 620-ab.

The MCF connector 910a and the transmission-side power supply connector 930 may be an integrated connector having the functions of both. Similarly, the MCF connector 910b and the reception-side power supply connector 940 may be an integrated connector having the functions of both.

Moreover, the transmission-side power supply connector 930 may incorporate the power supply laser 720 therein. In this case, an electrical signal is input to the transmission-side power supply connector 930 instead of the power supply laser beam. The power supply laser 720 incorporated in the transmission-side power supply connector 930 converts an input electrical signal to a power supply laser beam.

Moreover, the reception-side power supply connector 940 may incorporate the photoelectric conversion unit 750 therein. In this case, the reception-side power supply connector 940 outputs an electrical signal converted from the power supply laser beam by the photoelectric conversion unit 750.

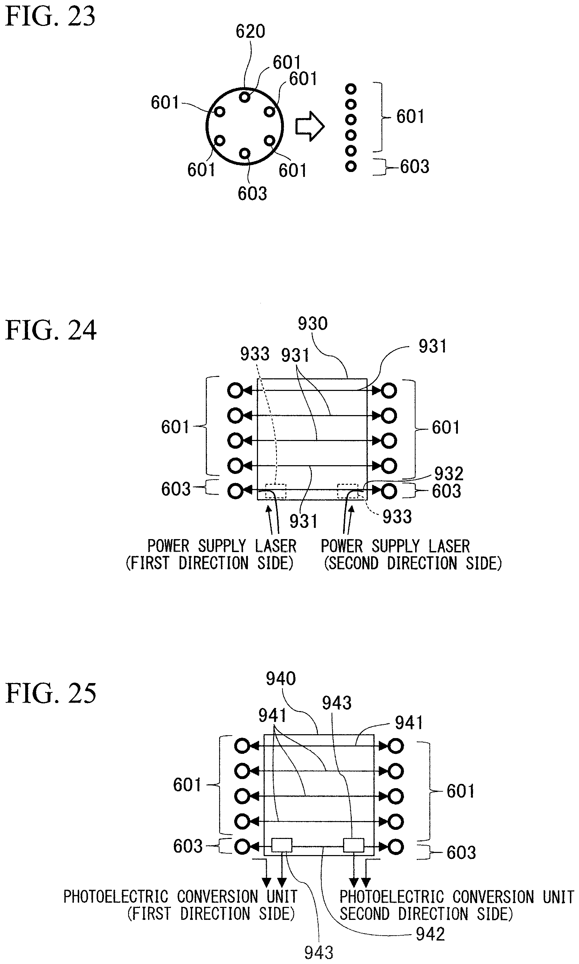

Fig. 23 is a cross-sectional view showing the MCF 620. As shown on the left side of Fig. 23, the cross-section of the MCF 620 is circular. The MCF 620 may have a cross-sectional shape other than the circular shape. Although a plurality of cores are disposed inside the MCF 620 at equal intervals on a concentric circle, the core arrangement may be arbitrary. Among the plurality of cores, n cores are the signal transmission cores 601 and m cores are the shared cores 603, m and n being integers 1 or more. The diagram shows a case in which n=5 and m=1. The arrangement order when the signal transmission cores 601 and the shared core 603 are arranged vertically like the diagram on the right side of Fig. 23 does not necessarily indicate the arrangement of the signal transmission cores 601 and the shared core 603 of the MCF 620. Moreover, partial signal transmission cores 601 which are not used among the n signal transmission cores 601 are not depicted, and the used signal transmission cores 601 only are depicted.

Fig. 24 is a diagram showing a configuration example of the transmission-side power supply connector 930. The transmission-side power supply connector 930 shown in the diagram supplies power supply laser beams to both the MCF 600 connected to the first direction side of itself and the MCF 600 connected to the second direction side of itself.

The transmission-side power supply connector 930 has n signal transmission paths 931, m shared transmission paths 932, and 2m optical coupling units 933. A small-diameter fiber, an optical waveguide, an optical system, and the like as shown in Figs. 2A, 2B, 3A, 3B, 4A, and 4B can be used as the signal transmission path 931 and the shared transmission path 932.

The transmission-side power supply connector 930 relays optical signals between the signal transmission cores 601 of the MCF 600 connected to the first direction side and the signal transmission cores 601 of the MCF 600 connected to the second direction side through the signal transmission path 931. The signal transmission paths 931 are connected to the signal transmission cores 601 directly or via the MCF connector 910a.

The transmission-side power supply connector 930 relays optical signals between the shared cores 603 of the MCF 600 connected to the first direction side and the shared cores 603 of the MCF 600 connected to the second direction side through the shared transmission paths 932.

The optical coupling units 933 are disposed on each of the first direction side and the second direction side of the shared transmission path 932. The optical coupling unit 933 provided on the first direction side couples the power supply laser beam output from the power supply laser 720 to the optical signal in the first direction relayed by the shared transmission path 932. The optical coupling unit 933 provided on the second direction side couples the power supply laser beam output from the power supply laser 720 to an optical signal in the second direction relayed by the shared transmission path 932.

The optical coupling unit 933 may couple the power supply laser beam to an optical signal transmitted through the shared core 603 on the first direction side only or an optical signal transmitted through the shared core 603 on the second direction side only. In this case, one optical coupling unit 933 may be disposed in the shared transmission path 932. A waveguide coupler, a circulator, or the like is used as the optical coupling unit 933, for example. The optical coupling units 933 disposed on the first direction side and the second direction side may be an integrated optical coupling unit having the functions of both.

Fig. 25 is a diagram showing a configuration example of the reception-side power supply connector 940. The reception-side power supply connector 940 shown in the diagram drops power supply laser beams from both the MCF 600 connected to the first direction side and the MCF 600 connected to the second direction side.

The reception-side power supply connector 940 has n signal transmission paths 941, m shared transmission paths 942, and 2m wavelength extraction functional units 943. A small-diameter fiber, an optical waveguide, an optical system, and the like can be used as the signal transmission path 941 and the shared transmission path 942 as shown in Figs. 2A, 2B, 3A, 3B, 4A, and 4B.

The reception-side power supply connector 940 relays optical signals between the signal transmission cores 601 of the MCF 600 connected to the first direction side of itself and the signal transmission cores 601 of the MCF 600 connected to the second direction side of itself through the signal transmission path 941. The signal transmission path 941 is connected to the signal transmission core 601 of the MCF 620 directly or via the MCF connector 910b.

The reception-side power supply connector 940 relays an optical signal between the shared core 603 of the MCF 600 connected to the first direction side and the shared core 603 of the MCF 600 connected to the second direction side by the shared transmission path 942.

The wavelength extraction functional units 943 are disposed on each of the first direction side and the second direction side of the shared transmission path 932. The wavelength extraction functional unit 943 provided on the first direction side extracts a power supply laser beam from the optical signal and the power supply laser beam transmitted in the second direction through the shared transmission path 942 by wavelength separation. The wavelength extraction functional unit 943 connects the extracted power supply laser beam to the photoelectric conversion unit 750 and relays the optical signal in the second direction as it is. The wavelength extraction functional unit 943 provided on the second direction side extracts a power supply laser beam from the optical signal and the power supply laser beam transmitted in the first direction through the shared transmission path 942 by wavelength separation. The wavelength extraction functional unit 943 connects the extracted power supply laser beam to the photoelectric conversion unit 750 and relays the optical signal in the first direction as it is. An arrayed waveguide grating (AWG), a circulator, a fiber Bragg grating (FBG), or the like is used as the wavelength extraction functional unit 943, for example. The wavelength extraction functional units 943 disposed on the first direction side and the second direction side may be an integrated wavelength extraction functional unit having the functions of both.

Due to the above-described configuration, in the optical power supply system 520, the MCF connector 910a of the node 530a relays an optical signal received from the signal transmission core 601 of the MCF 620-xa to the signal transmission path 931 of the transmission-side power supply connector 930. Moreover, the MCF connector 910a relays an optical signal from the signal transmission path 931 of the transmission-side power supply connector 930 to the signal transmission core 601 of the MCF 620-xa. Furthermore, the MCF connector 910a adds an optical signal of a destination of the node 530b to the shared transmission path 932 of the transmission-side power supply connector 930.

When the optical signal transmitted through the shared core 603 is not an optical signal that is to be dropped from the node 530a, the MCF connector 910a relays the optical signal transmitted through the shared core 603 of the MCF 620-xa to the shared transmission path 932 of the transmission-side power supply connector 930.

The transmission-side power supply connector 930 relays an optical signal connected to the signal transmission path 931 by the MCF connector 910a to the signal transmission core 601 of the MCF 620-ab. The transmission-side power supply connector 930 relays the optical signal connected from the signal transmission core 601 of the MCF 620-ab to the MCF connector 910a. Furthermore, the transmission-side power supply connector 930 couples the power supply laser beam output by the power supply laser 720 to the optical signal added to the shared transmission path 932 by the MCF connector 910a. The transmission-side power supply connector 930 adds the optical signal coupled to the power supply laser beam to the shared core 603 of the MCF 620-ab.

The reception-side power supply connector 940 of the node 530b relays optical signals connected from the signal transmission cores 601 of the MCF 620-ab to the MCF connector 910b. The reception-side power supply connector 940 relays optical signals added to the signal transmission path 941 by the MCF connector 910b to the signal transmission cores 601 of the MCF 620-ab. Furthermore, the reception-side power supply connector 940 connects the optical signal and the power supply laser beam transmitted through the shared core 603 of the MCF 620-ab to the shared transmission path 932. The wavelength extraction functional unit 943 splits the power supply laser beam among the optical signal and the power supply laser beam connected to the shared transmission path 932 by wavelength separation. The wavelength extraction functional unit 943 connects the power supply laser beam to the photoelectric conversion unit 750 and relays the optical signal to the MCF connector 910b. The photoelectric conversion unit 750 converts the power supply laser beam to an electrical signal and supplies the electrical signal to the power supply target facility 760.

The MCF connector 910b of the node 530b relays the optical signals transmitted through the signal transmission paths 931 of the reception-side power supply connector 940 to the signal transmission cores 601 of the MCF 620-bx. Moreover, the MCF connector 910b drops an optical signal addressed to the subject node transmitted through the shared transmission path 932 of the reception-side power supply connector 940. Furthermore, the MCF connector 910b adds the optical signal to the signal transmission core 601 allocated to a destination node.

When the optical signal transmitted through the shared core 603 is not an optical signal that is to be dropped from the node 530b, the MCF connector 910b relays the optical signal transmitted through the shared transmission path 932 of the reception-side power supply connector 940 to the shared core 603 of the MCF 620-bx.

Similarly to the node 510c of the optical power supply system 501 of the first embodiment shown in Fig. 14, another node between the node 530a and the node 530b may relay optical transmission.

Moreover, if the transmission-side power supply connector 930, the reception-side power supply connector 940, and the MCF 620 correspond to each other, MCFs 620 having a shared core 603 at different position may be connected together similarly to the optical power supply core 602 of the optical power supply system 502 of the first embodiment shown in Fig. 15.

Moreover, although the embodiment has been described for a case in which the optical signal and the power supply light are exchanged between the node 530a and the node 530b, a segment for exchanging the optical signal and a segment for exchanging the power supply light may be independent from each other. In this case, a functional unit for relaying the power supply light is necessary in the MCF connector 910a and the MCF connector 910b.

Moreover, similarly to the node 510b of the optical power supply system 504 of the first embodiment shown in Fig. 20, a plurality of nodes 530b may be disposed in series via the MCF 620. The reception-side power supply connector 940 of each node 530b drops a portion of the power supply laser beam transmitted through the shared core 603. The reception-side power supply connector 940 relays the optical signal and the remaining power supply laser beam to the shared core 603 of the MCF 620 between the reception-side power supply connector 940 and the subsequent node 530b. In this case, the wavelengths of power supply laser beams used for power supply by the each of the nodes 510b may be different each other, and the wavelength extraction functional unit 943 of the reception-side power supply connector 940 may split the power supply laser beam of the wavelength allocated to the subject node and may relay the power supply laser beam of other wavelength together with the optical signal.

In the above-described embodiment, although a case of using one shared core 603 has been described, when a plurality of shared cores 603 are used, the plurality of shared cores 603 may be allocated to respective nodes and supply optical power. In this case, the reception-side power supply connector 940 connects the power supply laser beam transmitted through the shared core 603 allocated to the subject node to the photoelectric conversion unit 750 of the subject node. The reception-side power supply connector 940 relays light transmitted through the shared cores 603 allocated to nodes other than the subject node to the MCF connector 910b.

Moreover, a configuration in which the power supply laser beam of one shared core 603 is shared between nodes and a configuration in which the power supply laser beams of the shared cores 603 are allocated to respective nodes may be combined.

Moreover, if MCFs are compatible, the transmission-side power supply connector 930 and the reception-side power supply connector 940 of the core-sharing optical power supply system 520 may be used in the core-occupying optical power supply systems 500, 501, 502, 503, and 504 of the first embodiment.

Moreover, the number of shared cores 603 may not be identical to the number of power supply lasers 720 or the number of photoelectric conversion units 750. For example, five power supply laser 720, three shared cores 603, and one photoelectric conversion unit 750 may be provided.

When a transmission destination of an optical signal is the same as a power supply destination of a power supply laser beam, and the optical signal and the power supply laser beam are transmitted using the same shared core 603, the transmission-side power supply connector 930 may not combine the optical signal and the power supply laser beam. In this case, the optical signal and the power supply laser beam may be combined before they are input to the MCF connector 910a. Similarly, when the transmission destination of the optical signal is the same as the power supply destination of the power supply laser beam and the optical signal and the power supply laser beam are transmitted using the same shared core 603, the reception-side power supply connector 940 may not split the optical signal and the power supply laser beam. In this case, the optical signal and the power supply laser beam may be split when or after they are connected to the MCF connector 910b.

According to the present embodiment, it is possible to supply electric power to a reception node using at least some of the cores of an MCF for both signal transmission and optical power supply.

According to the above-described embodiments of the present invention, it is possible to supply optical power to a device installed in a node. Therefore, it is possible to transmit electric power to a place where a power supply facility is not present and to simplify connection wiring to the device. Moreover, electric power supplied by a power supply laser beam may be accumulated in a secondary battery, a capacitor, or the like. The power supply target facility may operate with electric power supplied from the photoelectric conversion unit 750 or may operate with electric power accumulated in a secondary battery, a capacitor, or the like.

In the embodiments described above, a configuration in which MCFs are used for connection of nodes has been described. SCFs may be used for connection between nodes as shown in Figs. 9 and 10 without being limited to the configuration described in the embodiments. Even when a SCF is used for connection between nodes, since a power supply laser beam is transmitted from a power supply source node to a power supply destination node, optical power can be supplied similarly to the case in which MCFs are used for connection between nodes.

### INDUSTRIAL APPLICABILITY

The present invention can be used in a system in which signals are transmitted between nodes using a multi-core fiber.

### REFERENCE SIGNS LIST

- 100, 100A, 100C, 100D: Communication system
- 110, 110a, 110b: Transceiving node
- 111-1 to 111-6: Transmitting device
- 112-1 to 112-6: Receiving device
- 113-1 to 113-6: Transceiving device
- 120, 120-1 to 120-3: Add/Drop node
- 121-1 to 121-3: Transmitting device
- 122-1 to 122-3: Receiving device
- 125-1 to 125-3: Transceiving device
- 126-1 to 126-3: Transceiving device
- 150, 150-1 to 150-3: Connector
- 160-1 to 160-4: Connector
- 180-1 to 180-3: Connector
- 185-1 to 185-3: Connector
- 200-1 to 200-4, 200-21, 200-22: MCF (multi-core fiber)
- 201, 201-1 to 201-4, 201-21, 202-21, 203-21, 201-22, 202-22, 203-22: Core
- 202, 202-1 to 202-4: Core
- 203, 203-1 to 203-4: Core
- 210-1 to 210-4: MCF (multi-core fiber)
- 211, 211-1 to 211-4: Core
- 212, 212-1 to 212-4: Core
- 213, 213-1 to 213-4: Core
- 214, 214-1 to 214-4: Core
- 215, 215-1 to 215-4: Core
- 216, 216-1 to 216-4: Core
- 400-1, 400-2: Conversion connector
- 410-1, 410-2: Conversion connector
- 451, 452, 453: SCF (single-core fiber)
- 500, 501, 502, 504, 504, 520: Optical power supply system
- 510a, 510b, 510c, 510d, 530a, 530b: Node
- 601: Signal transmission core
- 602: Optical power supply core
- 603: Shared core
- 710, 710a, 710b, 710c, 710d: Connector
- 720: Power supply laser
- 730: Transmission-side power supply connector
- 731: Signal transmission path
- 732: Power supply transmission path
- 740: Reception-side power supply connector
- 741: Signal transmission path
- 742: Power supply transmission path
- 750: Photoelectric conversion unit
- 830: Transmission-side power supply connector
- 831: Signal transmission path
- 832: Power supply transmission path
- 840: Reception-side power supply connector
- 841: Signal transmission path
- 842: Power supply transmission path
- 843: Wavelength extraction functional unit
- 850: Reception-side power supply connector
- 851: Signal transmission path
- 852: Power supply transmission path
- 910, 910a, 910b: Connector
- 930: Transmission-side power supply connector
- 931: Signal transmission path
- 932: Shared transmission path
- 933: Optical coupling unit
- 940: Reception-side power supply connector
- 941: Signal transmission path
- 942: Shared transmission path
- 943: Wavelength extraction functional unit

## Claims

1. A node (510b, 530b) included in an optical power supply system (500, 501, 502, 503, 504, 520) which includes three or more nodes (110, 120, 510a, 510b, 510c, 510d, 530a, 530b) and a multi-core fiber (600, 610, 620) having a plurality of cores (601, 602, 603), the multi-core fiber (600, 610, 620) being used in at least a partial segment of the connection between the nodes (110, 120, 510a, 510b, 510c, 510d, 530a, 530b), the node (510b, 530b) comprising:
a power supply light dropping unit (740, 840, 850, 940) configured to drop a portion or all of a power supply light from one core (602, 603) of the plurality of cores of the multi-core fiber (600, 610, 620);
a photoelectric conversion unit (750) configured to convert the portion or all of the power supply light dropped by the power supply light dropping unit (740, 840, 850, 940) to an electrical signal; and
a power supply target facility (760) configured to operate with the electrical signal converted by the photoelectric conversion unit (750),
**characterized in that**:
the multi-core fiber (600, 610, 620) has a common cladding to the plurality of cores (601, 602, 603) of the multi-core fiber (600, 610, 620) in a cross-sectional view of the multi-core fiber (600, 610, 620) and,
each of the plurality of cores (601, 602, 603) of the multi-core fiber (600, 610, 620) does not contain the other of the plurality of cores (601, 602, 603) of the multi-core fiber (600, 610, 620).

2. A node (530a) included in an optical power supply system (520) which includes three or more nodes (110, 120, 510b, 530a, 530b) and a multi-core fiber (620) having a plurality of cores (601, 603), the multi-core fiber (620) being used in at least a partial segment of the connection between the nodes (110, 120, 510b, 530a, 530b), the node **characterized by** comprising:
a power supply light connecting unit (930) configured to couple a power supply light with an optical signal, the optical signal being received from an antecedent node (110, 120) of the nodes (110, 120, 510b, 530a, 530b), the power supply light connecting unit (930) being configured to connect the power supply light coupled with the optical signal to at least one core (603) of the plurality of cores (601, 603) of the multi-core fiber (620) to transmit the power supply light and the optical signal to a subsequent node (510b, 530b) of the nodes.

3. The node (530a, 530b) according to claim 1 or 2, wherein
the plurality of cores (601, 603) of the multi-core fiber (620) includes a core (603) used for transmitting a communication light and the power supply light.

4. The node (510b, 530a, 530b) according to claim 1 or 2, wherein
the plurality of cores (601, 602, 603) of the multi-core fiber (600, 610, 620) includes a core (601, 603) for transmitting a communication light and another core (602, 603) for transmitting the power supply light.

5. The node (510b, 530a, 530b) according to claim 4, wherein
an effective cross-sectional area of the another core (602) for transmitting the power supply light is larger than an effective cross-sectional area of the core (601) for transmitting the communication light.

6. The node (510b, 530a, 530b) according to claim 1 or 2, wherein
a wavelength of the power supply light is included in a wavelength range used by a communication light.

7. The node (510b, 530a, 530b) according to claim 1 or 2, wherein
a wavelength of the power supply light is not included in a wavelength range used by a communication light.

8. An optical power supply system (500, 501, 502, 503, 504, 520) comprising:
three or more nodes (110, 120, 510a, 510b, 510c, 510d, 530a, 530b); and
a multi-core fiber (600, 610, 620) having a plurality of cores (601, 602, 603), the multi-core fiber (600, 610, 620) being used in at least a partial segment of the connection between the nodes (110, 120, 510a, 510b, 510c, 510d, 530b), wherein
the three or more nodes (110, 120, 510a, 510b, 510c, 510d, 530b) includes:
the node (530a) according to claim 2 as a power supply source, and
the node (510b, 530b) according to claim 1 as a power supply destination.

## Patentansprüche

1. Knoten (510b, 530b), der in einem optischen Energieversorgungssystem (500, 501, 502, 503, 504, 520) enthalten ist, das drei oder mehr Knoten (110, 120, 510a, 510b, 510c, 510d, 530a, 530b) und eine Multikernfaser (600, 610, 620) mit einer Mehrzahl von Kernen (601, 602, 603) enthält, wobei die Multikernfaser (600, 610, 620) in wenigstens einem Teilsegment der Verbindung zwischen den Knoten (110, 120, 510a, 510b, 510c, 510d, 530a, 530b) verwendet wird, wobei der Knoten (510b, 530b) Folgendes umfasst:
eine Energieversorgungslichtausgabeeinheit (740, 840, 850, 940), die dazu konfiguriert ist, einen Teil oder alles von einem Energieversorgungslicht von einem Kern (602, 603) von der Mehrzahl von Kernen der Multikernfaser (600, 610, 620) auszugeben;
eine photoelektrische Umwandlungseinheit (750), die dazu konfiguriert ist, den Teil oder alles von dem Energieversorgungslicht, das durch die Energieversorgungslichtausgabeeinheit (740, 840, 850, 940) ausgegeben ist, in ein elektrisches Signal umzuwandeln; und
eine Energieversorgungszieleinrichtung (760), die dazu konfiguriert ist, mit dem elektrischen Signal zu operieren, das durch die photoelektrische Umwandlungseinheit (750) umgewandelt ist,
**dadurch gekennzeichnet, dass**:
die Multikernfaser (600, 610, 620) eine gemeinsame Ummantelung für die Mehrzahl von Kernen (601, 602, 603) der Multikernfaser (600, 610, 620) in einer Querschnittsansicht der Multikernfaser (600, 610, 620) hat, und
jeder von der Mehrzahl von Kernen (601, 602, 603) der Multikernfaser (600, 610, 620) nicht den anderen von der Mehrzahl von Kernen (601, 602, 603) der Multikernfaser (600, 610, 620) enthält.

2. Knoten (530a), der in einem optischen Energieversorgungssystem (520) enthalten ist, das drei oder mehr Knoten (110, 120, 510b, 530a, 530b) und eine Multikernfaser (620) enthält, die eine Mehrzahl von Kernen (601, 603) hat, wobei die Multikernfaser (620) wenigstens in einem Teilsegment der Verbindgung zwischen den Knoten (110, 120, 510b, 530a, 530b) verwendet wird, wobei der Knoten **dadurch gekennzeichnet ist, dass** er Folgendes umfasst:
eine Energieversorgungslichtverbindungseinheit (930), die dazu konfiguriert ist, ein Energieversorgungslicht mit einem optischen Signal zu koppeln, wobei das optische Signal von einem vorhergehenden Knoten (110, 120) der Knoten (110, 120, 510b, 530a, 530b) empfangen wird, wobei die Energieversorgungslichtvervindungseinheit (930) dazu konfiguriert ist, das mit dem optischen Signal gekoppelte Energieversorgungslicht mit wenigstens einem Kern (603) von der Mehrzahl von Kernen (601, 603) der Multikernfaser (620) zu verbinden, um das Energieversorgungslicht und das optische Signal zu einem nachfolgenden Knoten (510b, 530b) der Knoten zu übertragen.

3. Knoten (530a, 530b) nach Anspruch 1 oder 2, wobei die Mehrzahl von Kernen (601, 603) der Multikernfaser (620) einen Kern (603) enthält, der zur Übertragung eines Kommunikationslichts und des Energieversorgungslichts verwendet wird.

4. Knoten (510b, 530a, 530b) nach Anspruch 1 oder 2, wobei die Mehrzahl von Kernen (601, 602, 603) der Multikernfaser (600, 610, 620) einen Kern (601, 603) zur Übertragung eines Kommunikationslichts und einen anderen Kern (602, 603) zur Übertragung des Energieversorgungslichts enthält.

5. Knoten (510b, 530a, 530b) nach Anspruch 4, wobei eine effektive Querschnittsfläche des anderen Kerns (602) zur Übertragung des Energieversorgungslichts größer ist als eine effektive Querschnittsfläche des Kerns (601) zur Übertragung des Kommunikationslichts.

6. Knoten (510b, 530a, 530b) nach Anspruch 1 oder 2, wobei eine Wellenlänge des Energieversorgungslichts in einem Wellenlängenbereich enthalten ist, der durch ein Kommunikationslicht verwendet wird.

7. Knoten (510b, 530a, 530b) nach Anspruch 1 oder 2, wobei eine Wellenlänge des Energieversorgungslichts nicht in einem Wellenlängenbereich enthalten ist, der durch ein Kommunikationslicht verwendet wird.

8. Optisches Energieversorgungssystem (500, 501, 502, 503, 504, 520), umfassend:
drei oder mehr Knoten (110, 120, 510a, 510b, 510c, 510d, 530a, 530b); und
eine Multikernfaser (600, 610, 620) mit einer Mehrzahl von Kernen (601, 602, 603), wobei die Multikernfaser (600, 610, 620) wenigstens in einem Teilsegment der Verbindung zwischen den Knoten (110, 120, 510a, 510b, 510c, 510d, 530a, 530b) verwendet wird, wobei
die drei oder mehr Knoten (110, 120, 510a, 510b, 510c, 510d, 530a, 530b) Folgendes enthalten:
den Knoten (530a) nach Anspruch 2 als eine Energieversorgungsquelle, und
den Knoten (510b, 530b) nach Anspruch 1 als ein Energieversorgungsziel.

## Revendications

1. Nœud (510b, 530b) compris dans un système d'alimentation en puissance optique (500, 501, 502, 503, 504, 520) qui comporte trois nœuds (110, 120, 510a, 510b, 510c, 510d, 530a, 530b) ou plus et une fibre multi-cœur (600, 610, 620) ayant une pluralité de cœurs (601, 602, 603), la fibre multi-cœur (600, 610, 620) étant utilisée dans au moins un segment partiel de la connexion entre les nœuds (110, 120, 510a, 510b, 510c, 510d, 530a, 530b), le nœud (510b, 530b) comprenant :
une unité de diminution de lumière d'alimentation en puissance (740, 840, 850, 940) configurée pour diminuer une portion ou la totalité d'une lumière d'alimentation en puissance provenant d'un cœur (602, 603) de la pluralité de cœurs de la fibre multi-cœur (600, 610, 620) ;
une unité de conversion photoélectrique (750) configurée pour convertir la portion ou la totalité de la lumière d'alimentation en puissance diminuée par l'unité de diminution de lumière d'alimentation en puissance (740, 840, 850, 940) en un signal électrique ; et
une installation cible d'alimentation en puissance (760) configurée pour fonctionner avec le signal électrique converti par l'unité de conversion photoélectrique (750),
**caractérisé en ce que** :
la fibre multi-cœur (600, 610, 620) a une gaine commune à la pluralité de cœurs (601, 602, 603) de la fibre multi-cœur (600, 610, 620) dans une vue en coupe de la fibre multi-cœur (600, 610, 620) et,
chacun de la pluralité de cœurs (601, 602, 603) de la fibre multi-cœur (600, 610, 620) ne contient pas l'autre de la pluralité de cœurs (601, 602, 603) de la fibre multi-cœur (600, 610, 620).

2. Nœud (530a) compris dans un système d'alimentation en puissance optique (520) qui comporte trois nœuds (110, 120, 510b, 530a, 530b) ou plus et une fibre multi-cœur (620) ayant une pluralité de cœurs (601, 603), la fibre multi-cœur (620) étant utilisée dans au moins un segment partiel de la connexion entre les nœuds (110, 120, 510b, 530a, 530b), le nœud étant **caractérisé en ce qu'**il comprend :
une unité de connexion de lumière d'alimentation en puissance (930) configurée pour coupler une lumière d'alimentation en puissance à un signal optique, le signal optique étant reçu en provenance d'un nœud précédent (110, 120) des nœuds (110, 120, 510b, 530a, 530b), l'unité de connexion de lumière d'alimentation en puissance (930) étant configurée pour connecter la lumière d'alimentation en puissance couplée au signal optique à au moins un cœur (603) de la pluralité de cœurs (601, 603) de la fibre multi-cœur (620) pour transmettre la lumière d'alimentation en puissance et le signal optique à un nœud ultérieur (510b, 530b) des nœuds.

3. Nœud (530a, 530b) selon la revendication 1 ou 2, dans lequel
la pluralité de cœurs (601, 603) de la fibre multi-cœur (620) comporte un cœur (603) utilisé pour transmettre une lumière de communication et la lumière d'alimentation en puissance.

4. Nœud (510b, 530a, 530b) selon la revendication 1 ou 2, dans lequel
la pluralité de cœurs (601, 602, 603) de la fibre multi-cœur (600, 610, 620) comporte un cœur (601, 603) pour transmettre une lumière de communication et un autre cœur (602, 603) pour transmettre la lumière d'alimentation en puissance.

5. Nœud (510b, 530a, 530b) selon la revendication 4, dans lequel
une aire en coupe efficace de l'autre cœur (602) pour transmettre la lumière d'alimentation en puissance est plus grande qu'une aire en coupe efficace du cœur (601) pour transmettre la lumière de communication.

6. Nœud (510b, 530a, 530b) selon la revendication 1 ou 2, dans lequel
une longueur d'onde de la lumière d'alimentation en puissance est comprise dans une plage de longueur d'onde utilisée par une lumière de communication.

7. Nœud (510b, 530a, 530b) selon la revendication 1 ou 2, dans lequel
une longueur d'onde de la lumière d'alimentation en puissance n'est pas comprise dans une plage de longueur d'onde utilisée par une lumière de communication.

8. Système d'alimentation en puissance optique (500, 501, 502, 503, 504, 520) comprenant :
trois nœuds (110, 120, 510a, 510b, 510c, 510d, 530a, 530b) ou plus ; et
une fibre multi-cœur (600, 610, 620) ayant une pluralité de cœurs (601, 602, 603), la fibre multi-cœur (600, 610, 620) étant utilisée dans au moins un segment partiel de la connexion entre les nœuds (110, 120, 510a, 510b, 510c, 510d, 530b), dans lequel
les trois nœuds (110, 120, 510a, 510b, 510c, 510d, 530b) ou plus comportent :
le nœud (530a) selon la revendication 2 en tant que source d'alimentation en puissance, et
le nœud (510b, 530b) selon la revendication 1 en tant que destination d'alimentation en puissance.
